# EUROPEAN PATENT SPECIFICATION

(11) **EP 3 738 335 B1**
(45) Date of publication and mention of the grant of the patent: **17.07.2024**
(21) Application number: 19703796.3
(22) Date of filing: 08.01.2019
(51) Int. Cl.: H04W 16/32, H05B 45/12, F21V 23/04, F21S 8/08, H05B 47/19, H05B 47/11, F21W 131/103, F21Y 115/10

(54) **LIGHT POLE WIRELESS NETWORKING DEVICE**
LICHTMAST MIT DRAHTLOSNETZWERKVORRICHTUNG
DISPOSITIF DE RÉSEAUTAGE SANS FIL SUR PÔLE LUMINEUX

(30) Priority: 08.01.2018 US 201862614918 P
(43) Date of publication of application: 18.11.2020
(73) Proprietor: Ubicquia, Inc., Fort Lauderdale, FL 33301 (US)
(72) Inventor: AARON, Ian B., Fort Lauderdale, Florida 33301 (US); ZIMMERMAN, Ronald B. III, Fort Lauderdale, Florida 33301 (US); HUTSON, Bradford Brian, Fort Lauderdale, Florida 33301 (US)
(74) Representative: Herre, Peter
(86) International application number: PCT/US2019/012775
(87) International publication number: WO 2019/136480

(56) References cited:
- WO-A1-2015/183925
- US-A1- 2017 301 220

## Description

### BACKGROUND

### Technical Field

The present disclosure generally relates to devices having both cellular network capabilities and light control capabilities integrated therein. More particularly, but not exclusively, the present disclosure relates to a small cell mountable on a light pole.

### Description of the Related Art

A mobile network operator (MNO) is an entity that operates a cellular communications system. Mobile network operators may be private entities, public entities such as would owned and controlled by a government, public-private partnership entities, or other entities. A mobile network operator may be a for-profit entity, a non-profit entity, or an entity having some other financial model.

As the term is used in the present disclosure, an MNO may also be referred to as a wireless carrier, a cell service provider, a wireless service provider, cellular company, and many other like terms. An MNO provides cellular-based wireless communication services (*e.g*., voice services, data services, and the like) to subscribers. Subscribers are people or entities that pay one or more MNOs for access to the wireless communication services managed or otherwise controlled by the respective MNOs.

An MNO is different from a provider of other wireless services because the MNO owns or otherwise controls certain specific elements that are necessary to deliver wireless communication services to an end user. These necessary specific elements that set apart an MNO from providers of other wireless service include radio spectrum allocation (*i.e*., one or more radio spectrum licenses from a regulatory or government entity), wireless network infrastructure, and backhaul infrastructure. These infrastructure elements enable the MNO to provide wireless voice, data, or voice and data services to subscribers using frequencies that are allocated as part of the licensed radio spectrum. In addition, though not required, an MNO will generally also have an available infrastructure to charge and collect money for use of its wireless services, a customer service infrastructure, repair personnel and facilities, and the ability to provision computing devices (*e.g*., cell phones, smart phones, tablets, global positioning service (GPS) devices, vehicle-based devices, and the like) for permissive use of its wireless network services.

In some cases, MNOs or other entities provide non-cellular wireless services such as "WiFi" services. WiFi services are known to pass communications according to a communications standard administered by the Institute of Electrical and Electronic Engineers (IEEE). One such standard is referred to as IEEE 802.11. These non-cellular wireless communication services may be available to the public free or for a cost. These non-cellular wireless communication services may be available in restaurants, airports, airplanes, public buildings, and the like. Even when these WiFi services are provided by an MNO, these WiFi services are not considered "MNO services" or "cellular-based" services because they are delivered to end user devices using non-cellular frequencies and protocols. What's more, even if some portion of WiFi-delivered data is passed over a cellular-based network (*e.g*., infrastructure downstream of a WiFi access point couples communications to or through a cellular-based network), these services are still not considered MNO services, cellular-based services, or carrier services because the interface to the end-user device is enabled via WiFi services and not by cellular-based services.

In some cases, an MNO operates and offers access to its own branded cellular-based infrastructure. In other cases, an MNO provides access to its cellular-based infrastructure to other entities that provide services under a different brand. These other entities may be known as "downstream" or "virtual" carriers or by other such titles and phrases. The term MNO in the present disclosure includes actual mobile network operators, virtual network operators, and other such entities when the underlying wireless services are provided to an end user via the necessary specific elements that set apart an MNO from other providers of wireless service.

For reference but not completeness, some known MNOs of the Americas include AT&T, BELL, CLARO, ENTEL, MOVILNET, MOVISTAR, ROGERS, SPRINT, T-MOBILE, TELCEL, TELUS, TIM, VERIZON, and VIVO. Some European MNOs include EE, MEGAFON, MTS, O2, ORANGE, and VODAFONE. Some Asia-Pacific MNOs include AIRTEL, AIS, BSNL, CHINA MOBILE, CHINA TELECOM, CHINA UNICOM, DEA CELLULAR, JIO, KT, NTT DOCOMO, SK TELECOM, SOFTBANK CORP, TELSTRA, and VODAFONE.

In a cellular-based network, wireless communications to and from a user's mobile device occur at a frequency and according to a protocol controlled by the MNO. The user's mobile device includes a wireless transceiver arranged to communicate according to the MNO controlled frequency and protocol. During communications, the user's wireless transceiver is communicatively coupled to a wireless transceiver commissioned by the MNO. The data sent a received between the two wireless transceivers may include voice communications, short message service (SMS) messages, electronic mail, internet traffic, and any other such data.

The large area over which an MNO's cellular-based network operates is divided into areas called macrocells, which may be abbreviated simply to "cells." Many adjacent macrocells are formed to provide wireless cellular-based network coverage over a wide geographic area. Each macrocell may be served by one or more MNO-commissioned transceivers. Typically, however, each macrocell is served by three macrocell sites, which may also be referred to as base stations, base transceivers, cell towers, cell stations, or the like. Neighboring macrocells are generally arranged to use different frequencies, phases, or other distributive characteristics of the MNOs licensed frequency spectrum to reduce or avoid interference between macrocells. The macrocells and the mobile computing devices provisioned by the MNO to operate on its network are arranged to cooperate communicatively such that a mobile device may continue seamless communications as the mobile device moves from one macrocell to another.

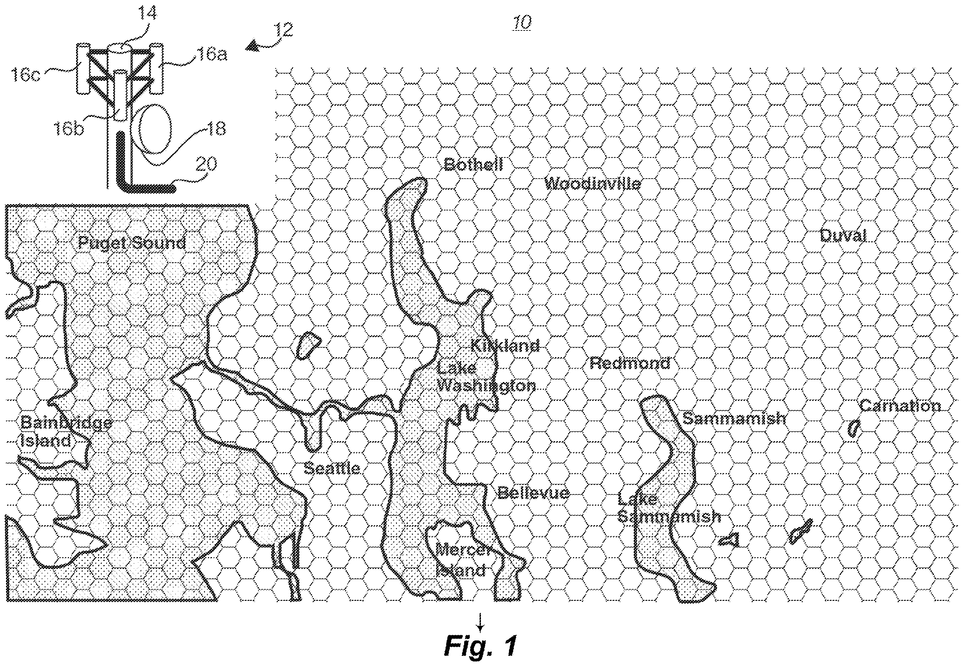

FIG. 1 is a representation of a geographic area served by an MNO's cellular-based network 10. The geographic area is divided into a plurality of adjacent macrocells, which in FIG. 1 are represented as having a generally hexagonal shape. For simplicity, a single MNO's cellular-based wireless network is represented in FIG. 1. It is recognized, however, that two or more cellular-based wireless networks frequently overlap and cover the same geographic area. This overlap increases consumer choices and options as multiple MNOs can operate competing wireless cellular-based networks.

The hexagonal shaped cells shown in FIG. 1 are in many cases preferred, but it is understood that the actual shapes and wireless network coverage pattern can depend on terrain, transmission and reception characteristics, access to desirable cell tower locations, population density, and the like. In other cases, a macrocell has a square shape, a circular shape, a different regular shape, or an irregular shape.

A representation of a macrocell tower 12 is also illustrated in FIG. 1. The macrocell tower 12 includes an aerial platform configured as a tower mast 14, a transceiver structure bearing a first cellular antenna 16a, a second cellular antenna 16b, and a third cellular antenna 16c. The three cellular antennas 16a-16c are directional antennas, and each of the cellular antennas is arranged to cover a 120 degree field. Each of the cellular antennas 16a-16c is tuned and arranged to pass wireless communication signals according to the chosen parameters of the MNO's licensed radio spectrum.

The macrocell tower 12 of FIG. 1 may include an optional fourth antenna 18. The fourth antenna 18 may be a microwave antenna or some other type of antenna. The fourth antenna 18 may provide line of sight communications to another macrocell tower (not shown) or to another site.

Power and land-based communication service is provided to the macrocell tower 12 by a cable assembly 20. In typical cellular-based network communications, the cable assembly 20 includes fiber optic cable to pass data sent to or from a mobile device from or into the public switched telephone network (PSTN), which is not shown. A core switched network device (not shown) may be used to pass voice and text data; a packet switched network device (not shown) may be used to pass electronic mail, internet communications, and other packetized data.

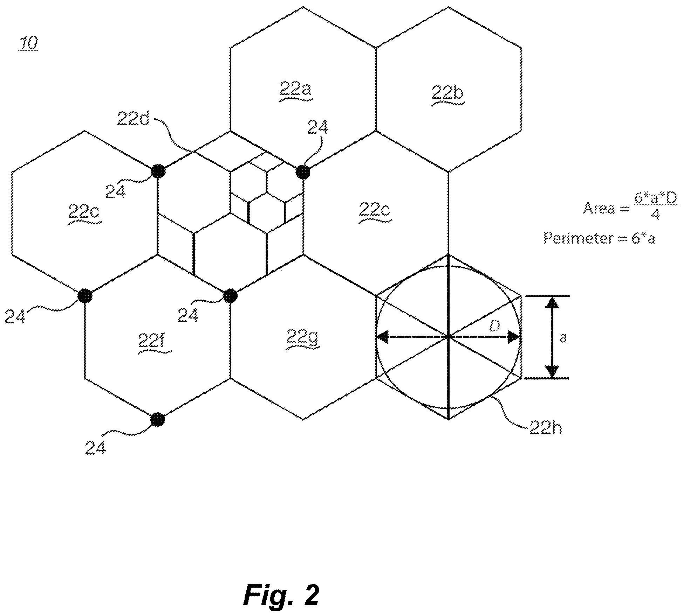

FIG. 2 shows an enlarged view of a plurality of adjacent macrocell sites 22a-22h in the geographic area served by an MNO's cellular-based network 10. In this geographic area, each macrocell 22a is served by three macrocell towers 12 (FIG. 1) wherein each macrocell tower is arranged at a cell intersection point 24. Several cell intersection points 24 are shown in FIG. 2, but not every cell intersection point in the geographic area of FIG. 2 is marked. From the cell intersection points 24 that are marked, however, it is evident that each of the three antennas of a macrocell tower 12 is directed into a different macrocell, and each macrocell is served by three different macrocell towers 12.

Macrocell 22h of FIG. 2 is also illustrated as having geometric markings and formulae. The parameters illustrated may be used by the MNO to determine how large a cell is, where macrocell towers are placed, where frequencies are re-used, and how much power is output from each macrocell tower. These and other parameters associated with providing wireless cellular-based communication services are determined and arranged by the MNO. In many cases, for example, a macrocell 22a-22h may have a diameter of about one mile to about 25 miles. In many cases, radiated broadcast power from each antenna 16a-16c of a macrocell tower 12 is up to about 500 watts. Typically, an MNO will arrange broadcast power and frequency spectrum use individually for each antenna to meet the conditions desired or otherwise chosen by the MNO, and often, these parameters are selected to permit line of sight communications from one macrocell tower 12 to six or more other macrocell towers 12.

In the enlarged view of FIG. 2, one macrocell 22d is illustrated as having several smaller hexagons arranged therein. The smaller geographic areas covered by the smaller sites represent areas that are challenged by geographic features, population density, or other factors where an MNO decides additional cellular coverage is necessary. Other arrangements of shapes and sizes are of course formed and implemented by conventional MNOs.

In the smaller areas shown in macrocell 22d, which may exist in any macrocell 22a-22h, an MNO may determine that additional network coverage is necessary, but the smaller area is not desirably serviceable by a macrocell tower 12. In these cases, the MNO may deploy a "small cell" to provide wireless cellular-based network communication services. It is generally known that a "small cell" is a term of art in the cellular-based industry. A mobile device provisioned by the MNO communicates with a small cell in the same or similar manner that the mobile device communicates with a macrocell tower 12. In at least some cases, an active communication session formed between a small cell and a mobile device may be handed off to or from a small cell as the mobile device moves into or out from the active range of the small cell. For example, a user having an active communication session enabled by a small cell may be in motion, and when the mobile device is in motion, the active communication session may in some cases be automatically and seamlessly handed off and continue via another small cell or via a macrocell tower 12.

As is known, many different types of small cells are deployed by MNOs to serve particular geographic areas within a larger macrocell. Some of the different types of small cells are microcells, metrocells, picocells, and femtocells. Microcells generally cover an area having diameter less than about one mile and operate with a radiated power of about five watts (5 W) to ten watts (10 W). Metrocells generally cover an area having a diameter of less than about a half mile and operate with a radiated power of about 5 W or less. Metrocells can provide wireless cellular-based service for up to about 200 concurrent mobile devices. Picocells generally cover an area having a diameter less than about 500 feet and operate with a radiated power of about 100 milliwatts (mW) to 5W; providing cellular-based wireless service for up to about 5 dozen concurrent mobile devices. Femtocells generally cover areas having a diameter less than about 30 feet and operate with a radiated power of about 10 mW to 1000 mW to provide cellular-based service for just a few mobile devices (*e.g*., 25 or fewer devices).

Small cells are usually owned, installed, and maintained by the MNO on whose network they will operate on. Even in cases of femtocells, which may be installed by a non-MNO entity, the femtocells are deployed and provisioned by the MNO for operation on the MNO's wireless cellular-based network. This provisioning is necessary in a small cell because the small cell operates in the MNO's licensed frequency spectrum. In addition to having a front end with a cellular-based interface, the small cell has a back end that provides backhaul services for the device. Small cell backhaul is the transmission link between the small cell and the MNO's core network. In some small cells, backhaul services are provided across conventional broadband internet services such as digital subscriber line (DSL), cable, a T1 line, or some other wide area network access point.

Conventional streetlight systems are known to those of ordinary skill in the street-lighting arts. Conventional street lights are typically mounted above a roadway, parking lot, or the like on a street light pole, lamppost, or some other elevated structure. Historically, street lighting was provided by incandescent filament-based lighting sources. In modern times, high-intensity discharge lighting sources such as high pressure sodium lamps are used to light streets and other areas. Even more recently, light emitting diode (LED) based luminaires are deployed to provide bright, controllable lighting with lower power consumption. In order to safely and effectively fulfill the needs of municipalities, governments, and private entities in an cost-efficient manner, most streetlight systems and sub-systems conform to one or more standards promulgated by a standards body.

The American National Standards Institute (ANSI) is a standards body that publishes and promotes standards for certain electrical equipment, mechanical equipment, and electromechanical equipment in use today. ANSI is a private, non-profit organization that oversees and administers development of voluntary consensus standards for products, services, processes, systems, protocols, and the like. It is also known that ANSI coordinates at least some U.S. standards with at least some international standards, which permits products manufactured according to U.S. standards to be used in other non-U.S. countries in the world.

Various standards developed by organizations, government agencies, consumer groups, companies, and others are accredited by ANSI. These standards are developed and promoted to provide consistent characteristics, definitions, terms, testing, implementation, and performance in products that are compliant with a given standard.

The National Electrical Manufacturers Association (NEMA) is one such organization that develops, promotes, or otherwise partners with ANSI. According to publicly available information, NEMA is the largest trade association of electrical equipment manufacturers in the United States. NEMA is a consortium of several hundred member companies that manufacture products used in the generation, transmission, distribution, control, and end use of electricity. These products are used in utility, industrial, commercial, institutional, and residential applications including lighting products installed over roadways, parking lots, constructions sites, pedestrian malls, manufacturing floors, and the like.

NEMA publishes standards documents, application guides, white papers, and other technical papers. NEMA also publishes and promotes several hundred technical standards for electrical enclosures, controllers, communication protocols, motors, wire, plugs, and receptacles among other equipment. Certain ones of NEMA's American National Standards directed toward Roadway and Area Lighting Equipment are referred to as ANSI C136 standards. At least one NEMA standard, referred to as ANSI C136.41, is directed to external locking type photo-control devices for street and area lighting.

WO 2015/183925 A1 discloses a communications system that includes a pole with an inner channel extending substantially an entire vertical height thereof, the pole being anchorable in a support surface. An antenna luminary assembly is received in the inner channel of the pole at an end thereof, the antenna luminary assembly including an antenna and a light source. The antenna luminary assembly is transitionable from an unlocked position where the antenna luminary assembly is rotatable about a central axis of the pole and a locked position where the antenna luminary assembly is non-rotatable about the central axis of the pole. A rotational position of the antenna luminary assembly relative to central axis of the pole defines a horizontal azimuth of the antenna.

US 2017/0301220 A1 discloses a modular approach for sensing and responding to detected activity or an event in a region that can be implemented quickly and easily using existing city infrastructure to establish a grid of sensors and detectors to provide localized or wide area coverage. The modular approach provides a turnkey solution or smart city in a box that can be adapted to different situations and needs to provide communications functionality and/or a desired or customized functionality for a wide range of different applications.

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### BRIEF SUMMARY

The invention is defined by the independent claims. The dependent claims concern optional features of the invention.

A "small cell" is a term of art in the cellular-based (*i.e*., mobile) industry. A small cell is deployed to provide wireless cellular-based network communication services in an area that is not adequately served by a macrocell tower. Certain approved mobile devices communicate with and through a small cell in the same or similar manner that the mobile devices communicate with a macrocell tower.

Until now, small cells were made or contracted to be made by and for individual mobile network operators (MNOs). Because each small cell must be integrated and adapted to work with proprietary features of the MNO's network, the MNO controls each small cell that operates on its cellular-based network. The methods, devices, and systems described herein are directed to small cells of a particular electromechanical configuration, which are arranged to be mounted on a streetlight fixture. Those of ordinary skill in the art will understand that the small cells described herein do not need to be directly coupled to streetlight fixtures, however, and instead, such small cells can be coupled to buildings, towers, masts, signage, or any other suitable aerial platform. These small cells add cooperative functionality and capabilities to the roadway and area lighting arts that have not previously been seen or known before.

According to the present invention, a small cell networking device is provided that includes: an outer housing; a first networking module positioned within the outer housing and arranged as a gateway to a first cellular-based network, the first cellular-based network controlled by a first mobile network operator (MNO); a second networking module positioned within the outer housing and arranged as a gateway to a second cellular-based network, the second cellular-based network controlled by a second mobile network operator that is different than the first mobile network operator, wherein the first networking module and the second networking module enable concurrent wireless communication sessions over the first cellular-based network and the second cellular-based network from mobile devices in proximity to the small cell networking device; a light sensor; a processor-based light control circuit arranged to provide a light control signal based on at least one ambient light signal generated by the light sensor; and a connector arranged to electromechanically couple to a corresponding socket integrated with a streetlight fixture and to receive alternating current (AC) power from the streetlight fixture; and a power supply for converting the AC power to direct current (DC) power for use by the first networking module, the second networking module, the light sensor, and the processor-based light control circuit.

The connector may be compliant with American National Standards Institute (ANSI) C136. The connector may be compliant with ANSI C136.41-2013. The small cell networking device may be a metrocell, a microcell, a picocell, or a femtocell. The connector may include at least three pin structures, the at least three pin structures arranged for removable electromechanical coupling to a streetlight fixture. The streetlight fixture may be administered by a government entity. The first networking module may include a modular radio transceiver board, the modular radio transceiver board provisionable for operation in the first cellular-based network of first selected MNO.

The second networking module may include a modular radio transceiver board, the modular radio transceiver board provisionable for operation in the second cellular-based network of first selected MNO.

The small cell networking device may be arranged to concurrently conduct wireless communications on at least two different cellular-based networks. The cellular-based network may conform to a global system for mobile communications (GSM) standard or a code division multiple access (CDMA) standard.

The small cell networking device may further comprise: at least two processing circuit boards configured in a vertically stacked arrangement, a first processing circuit board of the least two processing circuit boards including the power supply and an interface to the connector, a second processing circuit board of least two processing circuit boards including an applications processor; a first coupling structure that passes DC power signals from the first processing circuit board to the second processing circuit board; and a second coupling structure that passes communication signals between the first processing circuit board and the second processing circuit board.

In an example useful for understanding the invention, a method of a small cell networking device is provided, the method comprising: the small cell networking device having a networking module integrated therein and arranged as a cellular-based network gateway, and the small cell networking device having at least one light sensor electronically coupled thereto may be summarized as including: controlling a light output of a light source based on at least one ambient light signal generated by the light sensor; passing wireless data through the cellular-based network gateway across a cellular-based network controlled by a mobile network operator (MNO).

The method may include coupling the small cell networking device to a streetlight fixture via a connector that is compliant with a roadway area lighting standard promoted by a standards body.

The method may include, concurrent with passing wireless data through the cellular-based network gateway across the cellular-based network, passing second wireless data through a second cellular-based network gateway across a second cellular-based network controlled by a second mobile network operator (MNO).

According to the present invention, a system is summarized as including: the small cell networking device according to an embodiment of the present invention, a light pole, and the streetlight fixture coupled to the light pole and including the socket and a light source.

The streetlight fixture may be elevated between 20 feet (6 meter rounded down) and 40 feet (13 meter rounded up) above a roadway.

In an example useful for understanding the invention, a system is provided that may be summarized as including: a plurality of light poles in a determined geographic area, each light pole having at least one light source positioned in a fixture at least twenty feet above ground level; in a selected one of the light poles in the determined geographic area, electromechanically coupling a small cell networking device to the fixture of the selected light pole wherein the electromechanical coupling is performed via a connector that is compliant with a roadway area lighting standard promoted by a standards body; and a light sensor electrically coupled to a processor-based light control circuit, the processor-based light control circuit arranged to provide a light control signal to the light source of the selected one of the light poles based on at least one ambient light signal generated by the light sensor.

The system according to the example useful for understanding the invention may include, in two or more others of the plurality of light poles, electromechanically coupling a respective wireless networking device to the fixture of the respective two or more others of the plurality of light poles wherein the electromechanical coupling is performed via a respective connector that is compliant with the roadway area lighting standard promoted by the standards body.

Each wireless networking device of the two or more others of the plurality of light poles may be communicatively coupleable to the small cell networking device of the selected one of the light poles. A processor of the small cell networking device of the selected one of the light poles may be arranged to wirelessly pass light control signals to each respective wireless networking device of the two or more others of the plurality of light poles. The wireless networking devices of the two or more others of the plurality of light poles may be arranged to wirelessly communicate packetized data to, from, or to and from at least one mobile device. The small cell networking device may include a networking module arranged as a gateway to a cellular-based network, the cellular-based network controlled by a mobile network operator (MNO). The small cell networking device may be arranged to communicate packetized data on a public switched telephone network, the packetized data wirelessly received on the cellular-based network from at least one mobile device.

The features of embodiments according to the present invention, along with other objects and advantages that will become subsequently apparent, reside in the details of construction and operation more fully described hereafter and claimed, reference being made to the accompanying drawings that form a part hereof.

This Brief Summary has been provided to introduce certain concepts in a simplified form that are further described in detail below in the Detailed Description. Except where otherwise expressly stated, the Brief Summary does not identify key or essential features of the claimed subject matter, nor is it intended to limit the scope of the claimed subject matter.

### BRIEF DESCRIPTION OF THE SEVERAL VIEWS OF THE DRAWINGS

Non-limiting and non-exhaustive embodiments as well as examples useful for understanding the invention are described with reference to the following drawings, wherein like labels refer to like parts throughout the various views unless otherwise specified. The sizes and relative positions of elements in the drawings are not necessarily drawn to scale. For example, the shapes of various elements are selected, enlarged, and positioned to improve drawing legibility. The particular shapes of the elements as drawn have been selected for ease of recognition in the drawings. One or more embodiments are described hereinafter with reference to the accompanying drawings in which:
FIG. 1 is a representation of a geographic area served by an MNOs cellular based network;
FIG. 2 shows an enlarged view of a plurality of adjacent macrocell sites in the geographic area served by an MNOs cellular-based network;
FIG. 3A is a perspective view of a small cell networking device embodiment;
FIG. 3B is a right side view of the small cell networking device embodiment of FIG. 3A;
FIG. 3C is the small cell networking device embodiment of FIG. 3A mounted on a light fixture, which itself is coupled to a light pole.
FIG. 4A is a perspective view of another small cell networking device;
FIG. 4B is a right side view of the small cell networking device embodiment of FIG. 4A;
FIG. 5A is a perspective view of still another small cell networking device;
FIG. 5B is a right side view of the small cell networking device embodiment of FIG. 5A;
FIG. 6 is a side view of yet one more small cell networking device embodiment;
FIG. 7 is a small cell networking device block diagram;
FIG. 8 is a system level deployment having at least one small cell networking device and a plurality of smart sensor devices coupled to streetlight fixtures;
FIG. 9A is another partial system level deployment;
FIG. 9B is a closer view of one portion of the partial system level deployment of FIG. 9A;
FIG. 10 is one more partial system level deployment 200B; and
FIG. 11 is a flowchart according to an example useful for understanding the invention showing some operations of a system that deploys at least one small cell networking device on a light pole.

### DETAILED DESCRIPTION

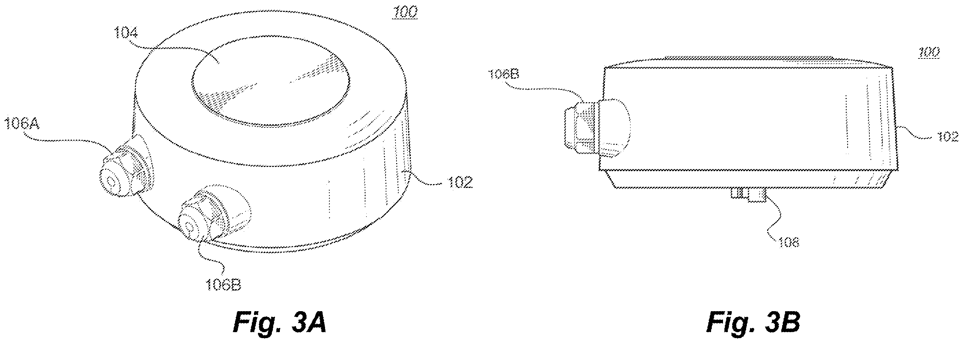

The present invention may be understood more readily by reference to this detailed description of the invention. The terminology used herein is for the purpose of describing specific embodiments only and is not limiting to the claims unless a court or accepted body of competent jurisdiction determines that such terminology is limiting. Unless specifically defined herein, the terminology used herein is to be given its traditional meaning as known in the relevant art. The claimed invention corresponds to fig. 3A-C, 6, 7 and to the related text in the description. The remaining figures and the text of the description are intended to better explain the invention.

Embodiments of the present invention include a small cell wireless networking device having a desired shape and electromechanical configuration for mounting on a light pole (*See* FIGS. 3A-8, for example) or other suitable aerial platform. More particularly, embodiments may be arranged with a certain NEMA-style connector integrated on one (*e.g*., bottom) side, which enables the device to be electromechanically coupled to the top side of a light fixture attached or otherwise integrated into the light pole. Some short exemplary cases are now summarized in a non-limiting, descriptive way merely to facilitate understanding of the present disclosure through demonstration of certain embodiments.

Once arranged on a light fixture, the small cell networking device is enabled to provide services for the streetlight and services for mobile devices in proximity to this or other streetlights. In at least some cases, the small cell device is also arranged to provide still other additional services to one or more third party entities such as utilities, law enforcement, schools, and retail and wholesale businesses.

The small cell networking devices described herein will include one or more light sensors. In some cases, the light sensor may be referred to as a lux sensor. Light sensors detect ambient light in proximity to the streetlight fixture. Using light sensor data, the small cell networking devices may control one or more characteristics of light produced by a light source mounted or otherwise integrated in the fixture or associated with the fixture. The characteristics can include the volume of light output (*i.e*., lumens or luminous flux), the color or frequency of output light, on/off timing, situational lighting, and the like. In at least some cases, the characteristics of light output from one streetlight fixture are cooperative with characteristics of light output from other (*e.g*., adjacent) streetlight fixtures.

In addition to certain streetlight control features, the small cell networking devices described herein also provide cellular-based wireless communication services to mobile devices. For example, a user holding a smartphone can make or receive a telephone call that passes wireless cellular data through the small cell networking device. Using the small cell networking devices described herein, a mobile network operator (MNO) can supplement its cellular-based network with coverage in dense urban areas, areas in geographic regions that are otherwise "dark spots" in its network (*e.g.*, valleys, places in the shadow of natural or manmade structures), in areas that are only periodically high-traffic areas (*e.g*., stadiums, arenas, show venues), in areas that are temporary (*e.g*., construction sites, disaster sites), and in other such areas.

A single small cell networking device includes electronic circuits that provide small cell functionality to two or more MNOs in a single device. For example, in some cases, a single small cell networking device may have antennas, transceivers, controllers, and the like that permit two mobile devices provisioned for wireless communications on different cellular-based networks operated by different MNOs to carry on concurrent communication sessions (*e.g*., phone calls, internet sessions, etc.). One of skill in the art will recognize that a single small cell networking device may have any desirable and physically containable number of antennas, transceivers, controllers, and the like that permit any number of mobile devices provisioned for wireless communications on different cellular-based networks operated by different MNOs to carry on concurrent communication sessions.

In some cases, the small cell networking device provides WiFi access point services to devices that are in proximity to the small cell networking device. These WiFi services are distinguished from cellular-based wireless communications because they do not necessarily require MNO provisioning in the manner that a mobile communication device requires provisioning. In these cases, for example, a small cell networking device may provide cellular-based service for a specific MNO, and the same small cell networking device may also provide WiFi services on behalf of a municipality that wants to provide free or low cost WiFi services to its residents. Exemplary WiFi service may, for example, include short range wireless communication services that comply with a protocol that meets the requirement of Institute of Electrical and Electronics Engineers (IEEE) 802.11.

The small cell networking devices described herein may in some cases be in communication with other small cell networking devices or other less sophisticated wireless communication devices. In at least one case, a geographic area has many streetlight poles. Some small cell networking devices are mounted on certain ones of the streetlight poles, and other less sophisticated wireless communication devices are mounted on other streetlight poles. These other less sophisticated wireless communication devices can each control characteristics of the light sources integrated on their respective light pole. In this type of system, however, due in part to the wireless capabilities of each device, and due in part to the sophistication of the small cell networking device, the lighting of the entire geographic area can be desirably and holistically controlled locally from the small cell networking device or remotely from a central site. And still other systems of this configuration enable the implementation and control of a wide range of sensors, controllers, and other "smart" devices, which can be integrated to provide MNOs, utilities, government agencies, and the like with a range of services not previously available.

Turning to the remainder of this Detailed Description, the present invention may be understood more readily by reference to this detailed description of the invention. The terminology used herein is for the purpose of describing specific embodiments only and is not limiting to the claims unless a court or accepted body of competent jurisdiction determines that such terminology is limiting. Unless specifically defined herein, the terminology used herein is to be given its traditional meaning as known in the relevant art.

In the following description, certain specific details are set forth in order to provide a thorough understanding of various disclosed embodiments. However, one skilled in the relevant art will recognize that embodiments may be practiced without one or more of these specific details, or with other methods, components, materials, etc. In other instances, well-known structures associated with computing systems, including client and server computing systems, as well as computing networks have not been shown or described in detail to avoid unnecessarily obscuring descriptions of the embodiments.

FIG. 3A is a perspective view of a small cell networking device 100 embodiment. The small cell networking device 100 is particularly arranged for mounting on a light pole, and even more particularly arranged for mounting on a light fixture (*e.g*., a luminaire). In these cases, the light fixture in at least some embodiments is aerially mounted between about 20 to 40 feet (6 meter to 13 meter) above the area to be illuminated (*e.g*., ground level, a roadway, a parking surface, and the like), and the light fixture is mounted on a light pole, a building, or some other structure. In some cases, the light poles, light fixtures, streetlights, buildings, roadways, parking surfaces, or any combination thereof are administered by a government entity.

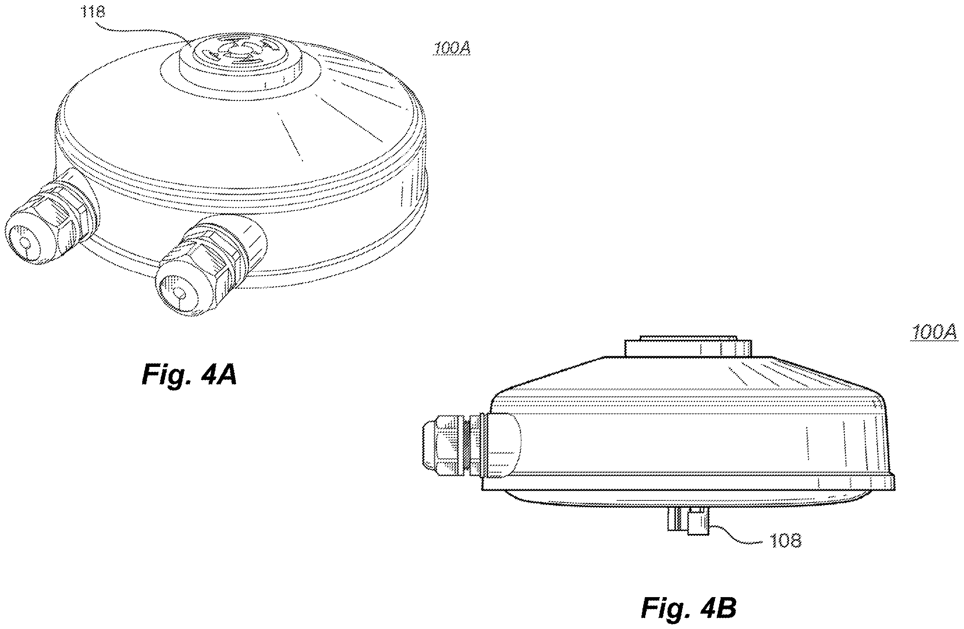

The small cell networking device 100 of FIG. 3A may have a substantially cylindrical form factor wherein a horizontal cross section has a substantially circular shape. The small cell networking device may have a substantially square form factor, a substantially rectangular form factor, a substantially hexagonal form factor, or a form factor having some other shape. Other form factors and horizontal cross sectional shapes are of course considered. In at least some cases, the diameter, or the length as the case may be, of the small cell networking device 100 is between about six (6) inches (15 cm rounded down) and twelve (12) inches (31 cm rounded up). In some embodiments, such as shown in the small cell networking device 100 of FIG. 3A, walls of the device are substantially vertical or within about 30 degrees of vertical. In other embodiment, walls of the small cell networking device that provide height to the device are segmented such that some portions of the wall are vertical or near-vertical and other portions of the wall structures are closer to horizontal (see, for example, FIGS. 4A, 5A, 6). Many shapes, styles, and dimensions of wall structures have of course been considered. In at least some embodiments, the walls of the small cell networking device 100 are formed to create a height of the device between about 2.5 inches (6 cm rounded down) and six (6) inches (16 cm rounded up).

The shape, dimensions, or shape and dimensions of the small cell networking device are in some cases selected to facilitate and otherwise improve the communication capabilities of the device. For example, in some cases, an antenna structured for communication according to a first wireless cellular communications network is arranged parallel to an antenna structured for communication according to a second wireless cellular communications network. In some cases, an antenna structured for communication according to a first wireless cellular communications network is arranged normal to an antenna structured for communication according to a second wireless cellular communications network. And in some cases, an antenna structured for communication according to a first wireless cellular communications network is arranged on an opposite side of the small cell networking device chassis as an antenna structured for communication according to a second wireless cellular communications network. Each or any of said arrangements may be selected to provide determined cellular coverage patterns for the aerially mounted small cell networking device. The selected coverage pattern may improve communication distance, communication efficiency, or some other aspects of communications on the respective cellular network.

The outer housing 102 of the small cell networking device 100 of FIG. 3A may be formed of metal, plastic, or some other material. In some cases, the outer housing 102 is painted, bonded, or otherwise coated with a weather-resistant material (*e.g*., a varnish, an enamel, a fluoropolymer, a powder-coating, or the like). In some cases, the outer housing 102 is arranged in color, shape, material, or some other characteristic to be resistant to birds, insects, or other pests. For example, the outer housing 102 may be mirrored, low-friction, spiked, or enabled with vibration, heat, cooling, an audio transducer, or some other anti-pest feature. In at least some embodiments, the outer housing 102 is constructed according to a standard published by the International Electrotechnical Commission (IEC) as Ingress Protection standard IP55. A housing constructed and deployed to IP55 is generally sufficient to resist or otherwise prevent dust and other solid materials from entering the housing and also sufficient to resist or otherwise prevent low pressure liquid (*e.g*., water) jetted from any direction from entering the housing.

The small cell networking device 100 includes a light sensor that may also be referred to as light sensor module 104. The light sensor module 104 of FIG. 3A may or may not include a lens. The light sensor module includes a light sensor surface that collects, absorbs, or otherwise detects photons, and an electronic circuit that generates a representation of light that is impacting the light sensor surface. The light sensor module 104 may be arranged to generate at least one light signal (*e.g*., an ambient light signal, a focused light signal, a data-infused light signal, or the like). Light signals generated by the light sensor module 104 may be digital values between a lower threshold and an upper threshold (*e.g*., between 0 bits and 1024 bits) that represent the amount of luminous flux (*e.g*., photons) that strike the light sensor module 104 at a particular point or within a particular time period. A processor-based light control circuit (not shown in FIG. 3A) is arranged to provide a light control signal based on at least one ambient light signal generated by the light sensor module 104, and in these cases, the light control signal may be used to direct characteristics of light output from a light source integrated in the corresponding light fixture. In some cases, the processor-based light control circuit may include two or more pulse-width management (PWM) circuits. Each PWM circuit is arranged to provide a light control signal having a controllable duty cycle. In this way, the processor-based light control circuit may vary the illumination, frequency, pattern, color output, or any other desirable characteristic of an associated light source.

In FIG. 3A, the small cell networking device 100 includes a pair of twist lock connectors 106A, 106B that provide cable access to the inside of the small cell networking device 100. In at least some cases, the twist lock connectors 106A, 106B are water tight, and in these or in other cases, the twist lock connectors 106A, 106B provide strain relief to cables that pass through the connectors. The twist lock connectors 106A, 106B in at least some cases expose a gland connector for 3-15 mm diameter cable resistant to foreign material ingress according to Ingress Protection standard IP67.

FIG. 3B is a right side view of the small cell networking device 100 embodiment of FIG. 3A. The outer housing 102 and one of the twist lock connectors 106B is identified in the figure. Also identified in FIG. 3B is a multi-pin NEMA connector 108. In at least some embodiments the multi-pin NEMA connector 108 is compatible with an ANSI C136 standard promulgated by the National Electrical Manufacturers Association (NEMA). The multi-pin NEMA connector 108 may be compatible with the standard referred to as ANSI C136.41, ANSI C136.41-2013, or some other standard. Alternatively, the multi-pin NEMA connector 108 may be implemented with some other connector useful for external locking type photo-control devices for street and area lighting.

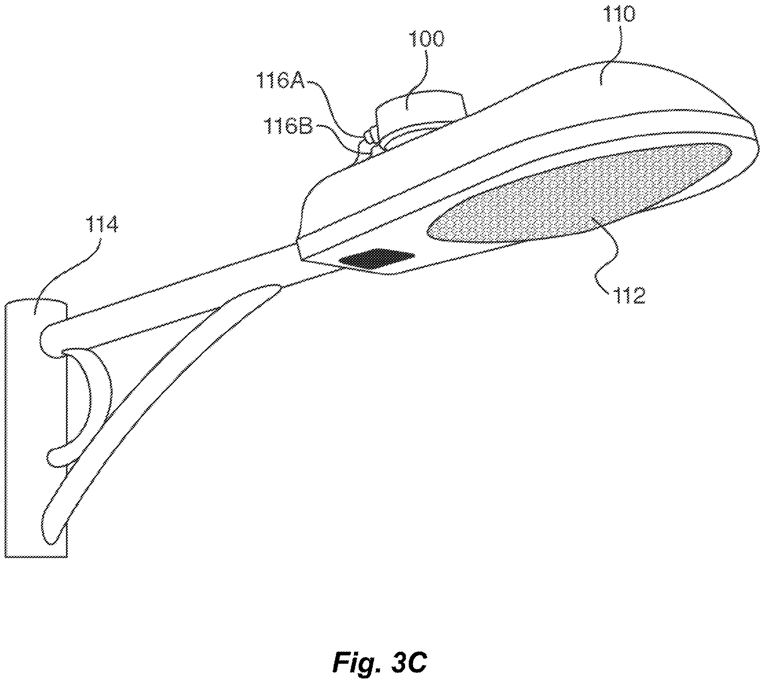

FIG. 3C is the small cell networking device 100 mounted on a light fixture 110, which itself is coupled to a light pole 114. The light fixture 110 includes a light source 112. Individually or in combination, any one or more of the light fixture 110, light pole 114, and light source 112 may be referred to as an aerial platform or a portion of an aerial platform. The light source 112 may be an incandescent light source, a light emitting diode (LED) light source, a high pressure sodium lamp, or any other type of light source. In the street light of FIG. 3C, the small cell networking device 100 is coupled to the light fixture 110 via the multi-pin NEMA connector 108. That is, the pins of the multi-ping NEMA connector 108 are electromechanically coupled to a compatible NEMA socket integrated into the light fixture 110. In some cases, the small cell networking device 100 replaces or otherwise takes the place of a different light sensor device, which does not have the features provided by the small cell networking device 100. Cables 116A, 116B are passed through the twist lock connectors 106A, 106B respectively of the small cell networking device 100. The cables 116A, 116B may be networking cables (*e.g*., Power over Ethernet (PoE)) cables, cables electrically coupled to other electronic circuits (e.g., cameras, transducers, weather devices, internet of things (IoT) devices, or any other type of device).

FIG. 4A is a perspective view of another small cell networking device 100A. FIG. 4B is a right side view of the small cell networking device 100A of FIG. 4A. Structures of the small cell networking device 100A that are along the lines of corresponding structures in the small cell networking device 100 of FIGS. 3A, 3B are not identified so as to not obscure different features in the device.

For ease in understanding the present disclosure, the small cell networking devices 100A-100C (FIGS. 4A-4B, 5A-5B, 6) shown in the accompanying figures may be referred to herein as simply a small cell networking device 100. Though various ones of the small cell networking devices may have different features and be distinguished accordingly, the common structures and operations of different ones of the small cell networking devices may be understood with reference to a small cell networking device 100.

The small cell networking device 100A of FIGS. 4A, 4B includes an integrated multi-pin NEMA receiver 118. Though not expressly marked, the multi-pin NEMA receiver 118 embodiment of FIG. 4A includes three holes, which are arranged to electromechanically receive three pins of a compatible NEMA connector (*e.g*., a multi-pin NEMA connector 108). In some embodiments, other signals are also passed through the multi-pin NEMA receiver 118 and the multi-pin NEMA connector 108. The multi-pin NEMA devices may include one or more contacts to pass these other signals, which may include a plurality of low power direct current (*e.g*., 0VDC to 10VDC) dimming control signals.

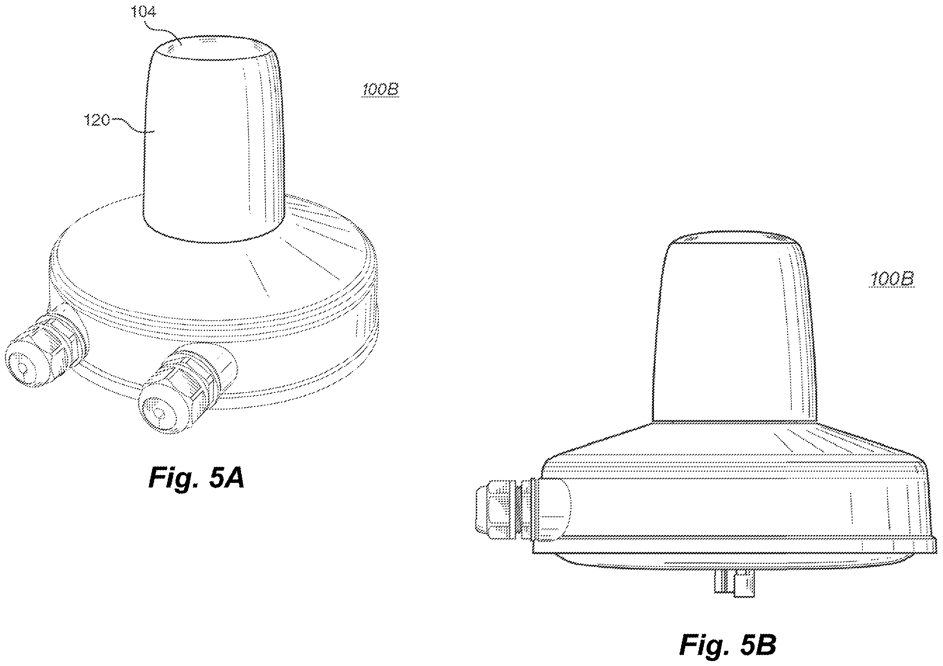

FIG. 5A is a perspective view of still another small cell networking device 100B, and FIG. 5B is a right side view of the small cell networking device 100B embodiment of FIG. 5A. Structures of the small cell networking device 100B that are along the lines of corresponding structures in the small cell networking device 100 of FIGS. 3A, 3B are not identified so as to not obscure different features in the device. In some cases, the small cell networking device 100B may be formed as a single unit, and in other cases, the small cell networking device 100B may be formed as a small cell networking device 100A (FIGS. 4A, 4B) having a smart sensor device 120 coupled thereto via the multi-pin NEMA receiver 118 of the small cell networking device 100A. As evident, the smart sensor device 120 may be coupled to a small cell networking device 100B as in FIG. 5A, or the smart sensor device 120 may be independently connected to its own light fixture without coupling to or through a small cell networking device.

The smart sensor device 120 includes a light sensor module 104. The smart sensor device 120 may also include non-cellular-based wireless capabilities (*e.g*., WiFi, Bluetooth, LoRa, etc.), local edge processing capabilities, and other features. In this way, the smart sensor device 120 may work as a traditional light sensor for it associated light source, and the smart sensor device 120 may provide other "smart" services. The smart sensor device 120, for example, may receive directions or other control information from a different small cell networking device, from a mobile device, from another smart sensor device 120, or from some other source. The smart sensor device 120 may also have one or more embedded algorithms that direct operations of an associated light source such as variable illumination based on any one or more of time-of-day, season-of-year, external conditions, motion detection, sound detection, or the like. With respect to motion detection, in at least some cases, motion is determined based on wireless communication with at least one mobile device. In such cases, for example, the smart sensor device 120 may detect an initial wireless communicative relationship established with the mobile device, a changing signal strength of the communication signal with the mobile device, a cellular handoff event associated with the mobile device, and advanced communication from a nearby smart sensor device or small cell networking device that an incoming handoff is imminent, or some other communication-based motion event. The smart sensor device 120 may have one or more sensors coupled thereto that provide actionable sensor input data that is used to control the associated light source. In still other cases, the smart sensor device 120 is arranged as a WiFi access point, a WiFi point in a mesh network, or some other wireless data gateway.

In some cases, a smart sensor device 120 includes a wireless transceiver arranged for low power, wide area network applications. Such a wireless transceiver may be referred to as a long range (LoRa) transceiver, a LoRa radio, a LoRa gateway, or another like term. The LoRa transceiver may be used to communicate with Internet of Things (IoT) sensors, machine-to-machine (M2M) devices, and in other such applications. If so implemented, the LoRa transceiver may be arranged as a module, and an interface to the module may be used by local and remote devices to communicate with a LoRa-enabled sensor. In at least some cases, the LoRa transceiver communicates via an unlicensed frequency below one gigahertz (1 GHz).

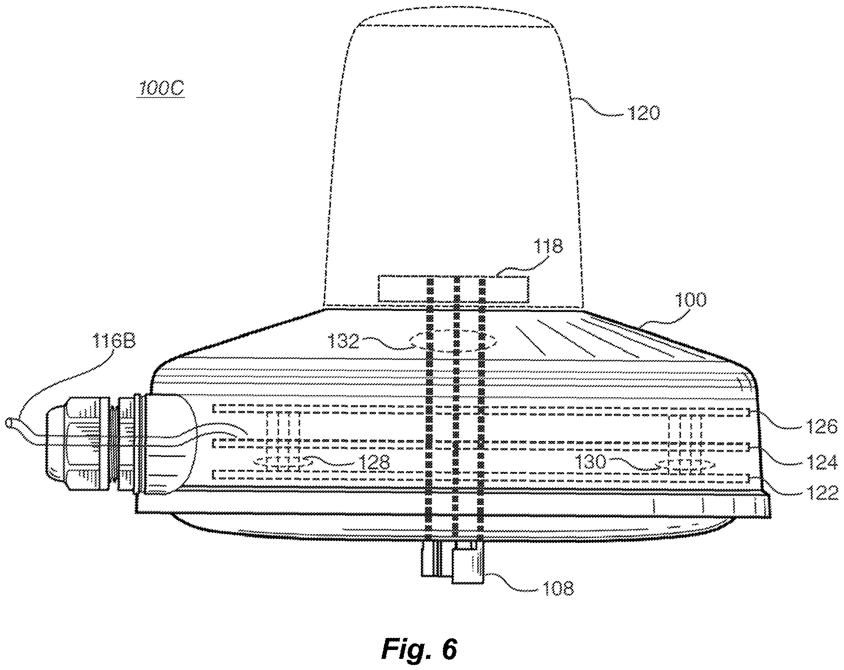

FIG. 6 is a side view of yet one more small cell networking device 100C embodiment. In the embodiment of FIG. 6, the multi-pin NEMA receiver 118 and the smart sensor device 120 are shown. In addition, to facilitate an understanding of the present disclosure, a particular portion of the small cell networking device 100C is identified as a small cell networking device 100.

Three levels of processing circuitry are shown in the small cell networking device 100 of FIG. 6, which include a first processing circuit board 122, a second processing circuit board 124, and a third processing circuit board 126. In other small cell networking device embodiments, more or fewer processing circuit boards are present. In these and other small cell networking device embodiments contemplated, circuit boards are horizontally mounted, vertically mounted, substantially circular, substantially square, or having other shapes, sizes, and configurations. In some cases, circuit boards or other structures in the small cell networking device 100 are positively keyed or arranged with some other reference structure to facilitate assembly. In this way, each of the plurality of circuit boards can be easily aligned with at least one adjacent circuit board, and all of the circuit boards are cooperatively aligned with the antennas, primary connectors (*e.g*., multi-pin NEMA connector 108, multi-pin NEMA receiver 118, twist lock connectors 106A, 106B (FIG. 3A), cables 116A, 116B, and the like).

The first, second, and third processing circuit boards 122-126 are formed as modular units. In some cases, the modular layout provides utilitarian benefits related to heat generation, heat dissipation, circuit re-use, radio wave interference reduction, easier or otherwise more efficient manufacturing processes, opportunities to provide combine more or fewer features within a small cell networking device, and the like. Accordingly, the modular structure of the small cell networking device 100 is more than simply design choice. Instead, several of the modular features described in the present disclosure have been invented to solve specific problems and provide desirable benefits.

The first, second, and third processing circuit boards 122-126 are mechanically, electrically, or electromechanically coupled. A first coupling structure 128 couples the three circuit boards according to a power bus, a second coupling structure 130 couples the three circuit boards according to a data bus, and in the embodiment of FIG. 6, a third coupling structure 132 optionally couples three pins of the multi-pin NEMA connector 108 through the first, second, and third processing circuit boards 122-126 to three pins of the multi-pin NEMA receiver 118. The coupling structures may include wires or other types of electrical conduits. The coupling structures, which in at least some cases serve as a reference (*e.g*., keyed) structure to facilitate alignment of the circuit boards, may also include pins, receptacles, housings, standoffs, bushings, contacts, and other suitable electrical, mechanical, or electromechanical structures.

In at least one embodiment, the first processing circuit board 122 is referred to as a power board. The first processing board may include a first interface to the multi-pin NEMA connector 108, which provides a first pin, a second pin, and a third pin. In at least some cases, the first pin is wired to provide a common/neutral/ground contact, the second pin is wired to provide a power/line voltage contact, and the third pin is wired to provide a load contact. In at least some cases, a 260VAC powerline source is coupled to the three corresponding contacts in a multi-pin NEMA receiver integrated with a light fixture 110. Via this receiver, AC line source power is brought into the small cell networking device 100. In other embodiments, AC line source power (*i.e*., utility power) is arranged as a powerline source providing 120VAC, 208VAC, 220VAC, 240VAC, 260VAC, 277VAC, 360VAC, 415VAC, 480VAC, 600VAC, or some other power source voltage.

The first processing circuit board 122 may include powerline filter circuitry, analog front end circuitry, switching power supply circuitry, and at least one digital baseband processor. In some embodiments, the digital baseband processor may be arranged as an International Telecommunication Union (ITU) gigahertz home network (G.hn) compliant MAC/PHY transceiver with multiple input, multiple output (MIMO) technology. In these cases, the power board can be arranged as a high-speed modem that enables Gigahertz networking (*e.g*., Ethernet) functionality over one or more programmable transmission paths and reception paths using the powerline as a communications medium. The powerline communications functions that are implemented on the power board can be used to provide backhaul services for cellular-based network functions that are also provided in the small cell networking device 100.

The second processing circuit board 124 is electrically and communicatively coupled to the first processing circuit board 122. DC power (*e.g*., 3.3VDC, 5VDC, 12VDC, 48VDC) is passed from the first processing circuit board 122 to the second processing circuit board 124. One or more of the direct current power signals is generated by the switching power supply of the first processing circuit board 122. The direct current power signals are passed via the first coupling structure 128. In these or in other cases, communication signals are passed between the first processing circuit board 122 and the second processing circuit board 124 via the second coupling structure 130. In at least some embodiments, the communications are facilitated via the gigahertz communication functionality of the digital baseband processor.

The second processing circuit board 124, which may also be called a main board, can include an applications processor, a network switch processor, and at least one network communications port. In the embodiment of FIG. 6, for example, the main board includes at least two RJ45 Ethernet port connectors, which are aligned with corresponding twist lock connectors 106A, 106B (FIG. 3A), and which facilitate the easy connection of first and second cables 116A, 116B (FIG. 3C). In at least some of these cases, the two RJ45 Ethernet port connectors are also coupled to respective power sourcing equipment (PSE) controllers, which enable Power over Ethernet functionality (PoE) with the small cell networking device 100. In still other cases, one or both of the twist lock connectors 106A, 106B pass fiber optic cables that are connectable to a small form factor pluggable fiber optic interface.

In the PoE type of arrangement, the small cell networking device 100 may receive power from a utility line source through multi-pin NEMA connector 108 or through a PoE cable passed through one or more twist lock connectors 106A, 106B. Also by the PoE, the fiber optic, or by other of these types of arrangements, the small cell networking device 100 may communicate (*i.e*., send and receive) packetized network traffic data over one or more different communications mediums such as via the utility powerline through multi-pin NEMA connector 108 or through a PoE or fiber optic cable passed through one or more twist lock connectors 106A, 106B. In these or other cases, the small cell networking device 100 may be arranged as a Gigabit Ethernet port or a Gigabit Ethernet switch. In these or alternative cases, the small cell networking device 100 may be arranged may be arranged to communicate at a rate of 1 Gbps or even higher.

It is recognized by one of skill in the art that the embodiments illustrated and described herein include two the twist lock connectors 106A, 106B and associated structures and functionality, but the invention is not so limited. In other embodiments, which are not shown to avoid overcomplicating the present disclosure, more or fewer mechanical ports (*e.g*., twist lock connectors, through-holes, grommeted punch-outs, and the like) may be included.

The applications processor of the main board may implement any number of features for the small cell networking device 100. In some cases, one or both cables 116A, 116B are not connected to provide networking functionality (*e.g*., Ethernet). Instead, one or both cables 116A, 116B may be arranged to pass sensor signals, internet of things (IoT) signals, multimedia signals (*e.g*., cameras or other multimedia devices), weather signals, transducer signals, control signals, or any other type of power and/or signaling data. By taking advantage of network and other signaling, the applications processor can perform local or system-level processing to control the light source 112 (FIG. 3C) and to control other aspects of the small cell networking device 100, such as cellular-based networking features (*e.g*., backhaul) on behalf of an MNO.

The third processing circuit board 126 is a cellular baseband radio/antenna board. The third processing circuit board 126 enables the "small cell" functionality of wireless communications on one or more cellular-based networks operated or otherwise controlled by an MNO. In at least one embodiment, the functionality of the radio/antenna board permits the small cell networking device 100 to operate as a single band 4G LTE small cell for street light mounting with power sourced via a NEMA socket of the street light, and with backhaul provided by powerline communications, PoE communications, fiber optic communications, WiFi communications, or any combination thereof. The radio/antenna board may include one or more Band 4 MIMO antennas and one or more listening antennas integrated therein or coupled thereto. Alternatively, or in addition, any one or more of the Band 4 MIMO antennas and one or more listening antennas may be arranged in a housing of the small cell networking device and communicatively (*e.g*., electrically) coupled to the radio/antenna board. In this way, any one or more of the antennas may be suitably arranged to improve communications (*e.g*., mounted vertically, mounted normal to an adjacent antenna, mounted flush with a selected surface of the small cell networking device housing, or mounted in some other position.)

In some cases, the radio/antenna board may be arranged to include one or more cellular-based radio chipsets. In other cases, the radio/antenna board may include antennas and support circuits and structures while one or more cellular-based radio chipsets are arranged on the second processing circuit board 124 (*i.e*., the main board). In either case, the one or more radio chipsets control the cellular-based radio functionality, and without limitation, but for the purpose of discussion, the cellular-based network chipsets are described as being formed on the third processing circuit board 126 (*i.e*., radio/antenna board).

The radio/antenna board permits the small cell networking device 100 to be configured as a microcell, metrocell, picocell, femtocell, or some combination thereof. It is recognized that in some cases, the radio/antenna board may include RF functionality that operates in part of the unlicensed RF spectrum, but even in these cases, at least some portion of wireless communications of the small cell networking device is enabled to pass through the MNO-controlled, cellular-based wireless network.

The cellular-based radio chipsets and supporting circuitry of the small cell networking device 100 may be considered at the modular level. In an example useful for understanding the invention, the small cell networking device 100 may include a single cellular-based radio chipset and supporting circuitry for a single cellular-based network, the device may be considered to include a networking module arranged as a gateway to a cellular-based network, wherein the cellular-based network is controlled by a mobile network operator (MNO). In these and other cases, the small cell networking device 100 itself may be considered as a microcell, metrocell, a picocell, or as a femtocell.

According to the present invention, the small cell networking device 100 may include a first and a second cellular-based radio chipset and supporting circuitry for a first and a second cellular-based network. The small cell networking device 100 has a first and a second networking module arranged as a first and a second gateway to a corresponding first and a second cellular-based network, wherein the first and the second cellular-based network is controlled by a corresponding MNO. In this way, the small cell networking device 100 is arranged to concurrently conduct wireless communications on at least two different cellular-based networks. And in further examples, third, fourth, or any number of cellular-based radio chipsets and supporting circuitry may be included in a small cell networking device 100 to support any number of cellular-based networks and any number of concurrent cellular-based communications. Limitations for the number of cellular-based radio chipsets may occur based on available space in the small cell networking device 100 outer housing 102 (FIG. 3A), based on available power (*i.e*., source power, transmission power, or the like), based on available computing resources, based on frequency bandwidth in geographic proximity to the small cell networking device 100, or based on other factors.

In some cases, a single radio/antenna board includes one or more configurable cellular-based radio chipsets and supporting circuitry. In these cases, the configurable nature of the device permits a modular radio transceiver board to be provisionable for operation in the cellular-based network of any selected MNO. The board may be configured in a factory, in a service center, in the field, or remotely after the small cell networking device 100 is installed in the field, and in other sites and circumstances.

In at least some cases, one or more transceiver modules are arranged with an interface exposed via a virtualized radio access network (vRAN), a virtual baseband unit (VBBU), or some other virtualized structure. In these cases, many baseband functions that are performed by the small cell networking device 100 are abstracted from the physical hardware and instead executed as virtualized network functions. In such an arrangement, the small cell networking device 100 is programmable and in some cases reprogrammable. In this way, small cell networking devices 100 may be manufactured, shipped, installed, and even deployed before an MNO or authorized entity provisions the small cell networking device 100 for operation in a selected wireless cellular network.

In some embodiments, one or more transceiver modules of a small cell networking device 100 include license assisted access (LAA) functionality. In these cases, the particular transceiver module is configured to leverage the unlicensed 5 GHz band of the radio spectrum in combination with the licensed spectrum controlled by the particular MNO. By combining bandwidth from both portions of the radio spectrum, the small cell networking device 100 is able to deliver improved network performance boost to mobile device users communicatively coupled to the particular small cell networking device 100. To provide LAA features, the small cell networking device 100 is arranged to "listen" before communicating on the unlicensed 5 GHz band of the radio spectrum. By listening, the small cell networking device 100 is arranged to co-exist with WiFi by avoiding or cooperatively sharing channels that are in use for WiFi communications.

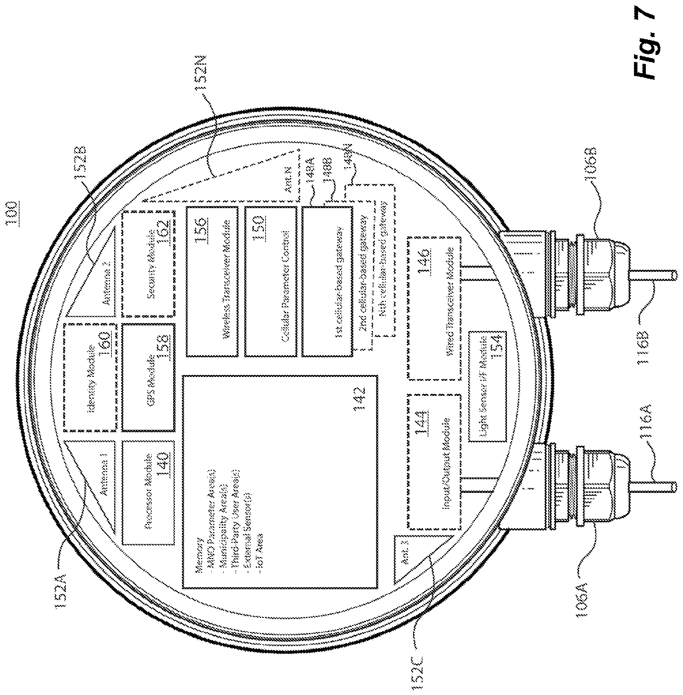

FIG. 7 is a small cell networking device 100 block diagram. In the embodiment, a processor module 140 includes an applications processor as well as other peripheral circuitry for the processor such as power circuitry, clock circuitry, memory control circuitry, and the like. The processor module 140 is communicatively coupled to a memory module 142. The memory module 142 includes memory of one or more types, which may be desirably partitioned into small cell networking device owner areas, one or more MNO areas, one or more municipality areas, one or more third-party areas, global areas, executable code areas, parameter areas, system areas, sensor areas, IoT areas, secure areas, unlicensed communication areas, licensed communication areas, and other areas as selected or otherwise implemented by one or more computing professionals. The memory module 142 is arranged to store instructions (*e.g*., software, code, programming, and the like) that, when executed by the processor module 140, when the processor module 140 is in operation, carry out the functions of the small cell networking device 100 described, without limitation, throughout the present disclosure.

The small cell networking device 100 includes one or more optional input/output modules 144 and one or more optional wired transceiver modules 146. The embodiment of FIG. 7 illustrates first cable 116A electromechanically coupled to an input/output module 144 and second cable 116B electromechanically coupled to wired transceiver module 146, but other embodiments are not so limited (*e.g*., any number cables, connectors, and input/output modules are also considered). As discussed herein, the modular design of the small cell networking device 100 permits any desirable arrangement of cables through the twist lock connectors 106A, 106B coupled to pass power, communications, control signals, or other information into, out from, or into and out from the small cell networking device 100.

The small cell networking device 100 includes a first cellular-based gateway 148A, which is a first networking module arranged as a first gateway to a first cellular-based network. The first cellular-based network is controlled by a first mobile network operator (MNO). The first cellular-based gateway 148A enables functionality for a mobile device in proximity to the small cell networking device 100 to conduct a wireless communication session using the first cellular-based network controlled by the first MNO. The wireless communication session may be a cellular phone call, a short message service (*e.g*., text) message, an electronic mail, an internet session (*e.g*., delivery of multimedia information through a browser or other client software application on the mobile device), a tracking message, or any other type of communication that passes data over the first MNO-controlled first cellular-based network. Typically, the mobile device conducting the wireless communication session has been provisioned by at least one MNO for operation on at least one cellular network, and such provisioning is a pre-condition for conducting the wireless communication session.

The small cell networking device 100 includes a second cellular-based gateway 148B, and optionally a third cellular-based gateway, and any number of other cellular-based gateways 148N. By inclusion of multiple cellular-based gateways, the small cell networking device 100 enables a plurality of concurrent wireless communication sessions via the same or different MNO-controlled cellular-based networks.

Wireless communication sessions that are enabled through two or more cellular-based gateways 148A-148N may pass packetized data through two or more networking structures of the small cell networking device 100. In many cases, packetized data wirelessly received on the cellular-based network from at least one mobile device is communicated on or otherwise through a public switched telephone network (PSTN). The packetized data may be further communicated between the small cell networking device 100 and the PSTN in one or more ways. In some embodiments, the packetized data is passed through the same or another cellular-based gateway 148A-148N to a cellular macrocell, to a landline, or to another small cell networking device 100. In some embodiments, the packetized data is passed through a wired transceiver module 146 (*e.g*., PoE, digital subscriber line (DSL), broadband cable, or the like) and a cable 116A, 116B to another computing device. In some embodiments, the packetized data is passed through a different cabled transceiver and cable 116A, 116B such as a fiber optic transceiver and cable medium. In still other cases, the packetized data is passed through a wireless transceiver module 150, which may be a WiFi (*e.g*., IEEE 802.11) transceiver or a different type of wireless transceiver (*e.g*., licensed RF, unlicensed RF, satellite) that communicates according to a different protocol (*e.g*., a proprietary protocol, a satellite protocol, or some other protocol).

Operations of the two or more cellular-based gateways 148A-148N may be directed by a cellular-based parameter control module 150. In some cases, the cellular-based parameter control module 150 includes features that enable a small cell networking device 100 systems integrator or some other party to provision the small cell networking device 100 on a cellular-based network of a selected MNO. In this way, the MNO can itself provision each small cell networking device 100 for operates on the cellular-based network it controls, or the MNO can authorize another entity to provision the small cell networking device 100. The feature set provided by the cellular-based parameter control module 150 promotes efficiency, cost-effectiveness, rapid-deployment, temporary deployment, one or more revenue models, and many other benefits.

The small cell networking device 100 includes a plurality of antennas to enable the wireless features of the device. Four antennas are represented in FIG. 7, which include a first antenna 152A, a second antenna 152B, a third antenna 152C, and an Nth antenna 152N. Each antenna may be physically formed, arranged, positioned, and oriented to advantageously provide favorable communication of data. In some cases, one or more antennas are arranged to communicate data on a cellular-based network. In some cases, one or more antennas provide signal-sniffing capabilities. In some cases, one or more antennas are arranged to wirelessly communicate data on a non-cellular, licensed or unlicensed frequency or frequency spectrum as the case may be. In some cases the radial design, squared design, or other desirably shaped design of the casted small cell cover (*e.g*., housing) will be used to enhance antenna performance.

A light sensor interface module 154 is included in the small cell networking device 100. The light sensor interface module 154 may include or otherwise enable light sensor functionality for one or more light sources such as a streetlight arranged in a light fixture that the small cell networking device 100 is coupled to. In some cases, the light sensor interface module 154 communicates with a light sensor module 104 (FIGS. 3A, 5A). In other cases, a light sensor module 104 is integrated with the light sensor interface module 154. The processor of processor module 140 may direct the operations of a light source based on data generated or otherwise provided by the light sensor interface module 154. For example, when ambient light in proximity to the small cell networking device 100 reaches one or more lower threshold values, the light source may be directed to turn on or otherwise increase its light output. Conversely, when the ambient light in proximity to the small cell networking device 100 reaches one or more upper threshold values, the light source may be directed to turn on or otherwise decrease its light output. In some cases, the processor intelligently directs the operation of an associated light source based on information received from any of the available transceivers. In this way, for example, when a first light source from a nearby light pole is undesirably reduced in intensity, a second light source in close proximity may be directed to increase its intensity. As another example, a municipality, law enforcement agency, third-party private entity, or some other entity may intelligently control light output from a plurality of light sources. The intelligent light control of a plurality of light sources may be used for safety, advertising, celebration, crowd control, or any number of other reasons. In at least one embodiment, the small cell networking device 100 wireless communicates its light sensor data to another smart device. In this embodiment or other embodiments, the small cell networking device 100 wirelessly receives light sensor data from one or more other smart devices.

The wireless transceiver module 156 may provide wireless communication capability to any one or more devices having corresponding wireless transceivers. In some cases, for example, using functionality provided by the wireless transceiver module 156, the small cell networking device 100 is arranged to operate as a WiFi access point. In this way, the small cell networking device 100 permits one or more mobile devices to access the internet. Municipalities or other entities may make internet services available over a determined geographic area (*e.g*., a neighborhood, a city, an arena, a construction site, a campus, or the like) to remote mobile devices that are in proximity to any one of a plurality of small cell networking devices 100. For example, if many street light fixtures in a neighborhood or city are equipped with a small cell networking device 100, then WiFi service can be provided to a large number of users. What's more, based on seamless communication between a plurality of small cell networking devices 100, the WiFi service can be configured as a mesh that permits users to perceive constant internet connectivity even when the mobile device is in motion.

A global positioning system (GPS) module 158 is arranged in small cell networking device 100. The GPS module 158 permits the small cell networking device 100 to accurately report its position to another computing device. In some cases, the position may be used to positively identify the particular small cell networking device 100. In some cases, the position may be used to expressly direct service personnel to the site where the small cell networking device 100 is installed. The position information can be used diagnostically when a light source is failing, when an IoT device or some other sensor reports any type of information, and for other reasons. The highly accurate time-base of the GPS module may also be used by the small cell networking device 100 for weather data, almanac data, signal triangulation with other small cell networking devices 100, or for other purposes.

In some cases, an optional identity module 160 is arranged in the small cell networking device 100. The identity module 160 may include electronic, mechanical, or electromechanical switch circuitry, memory, a random number, a random number generator, a system-wide unique identifier, a world-wide unique identifier, or other such information. When combined with position information from the GPS module 158, the small cell networking device 100 may be able to more accurately report its identity and position to another computing device. The identity information can be used diagnostically and for other reasons. In at least some cases, identity information provided by an identity module is used as a network identifier for the small cell networking device 100. The identity information may be arranged as a 32-bit number, a 64-bit number, another number having a structurally preferable bit-width, a combination of information that further conveys information about the capabilities of the small cell networking device 100 (*e.g*., date of deployment, year of deployment, hardware version number, software version number, geographic location, or other such information).

A security module 162 is also optionally included in some embodiments of a small cell networking device 100. The security module may include one or more of an encryption engine, a decryption engine, a random number generator, a secure memory, a separate processing device, and the like.

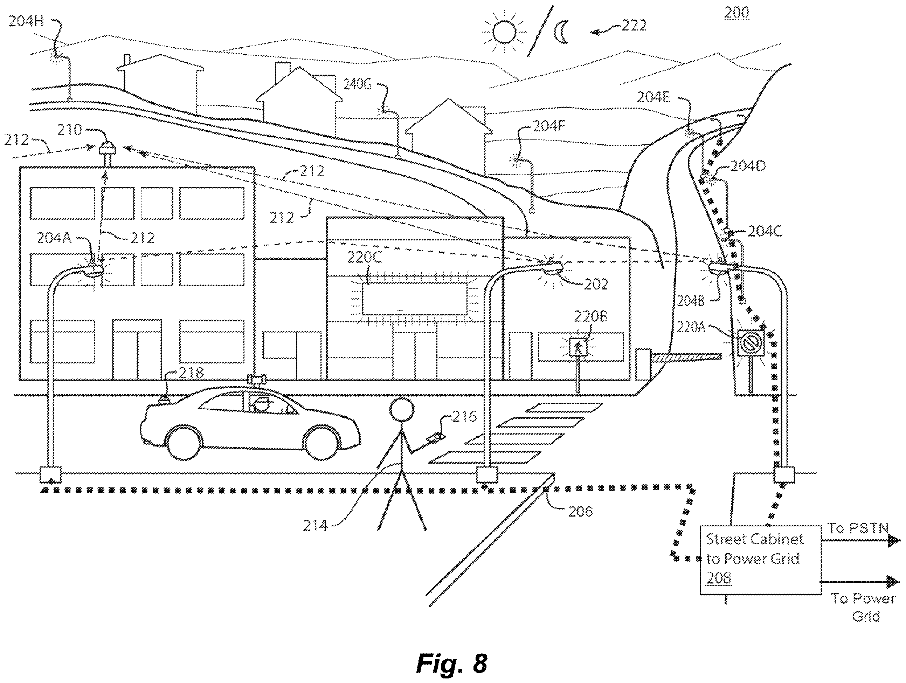

FIG. 8 is a system level deployment 200 according to an example useful for understanding the invention and having at least one small cell networking device and a plurality of smart sensor devices coupled to streetlight fixtures. The streetlight fixtures are coupled to or otherwise arranged as part of a system of streetlight poles, each streetlight fixture includes a light source. Each light source, light fixture, and light fitting, individually or along with their related components, may in some cases be interchangeably referred to as a luminaire, a light source, a streetlight, a streetlamp, or some other such suitable term.

As shown in the system level deployment 200 according to an example useful for understanding the invention, a plurality of light poles are arranged in one or more determined geographic areas, and each light pole has at least one light source positioned in a fixture. The fixture is at least twenty feet above ground level and in at least some cases, the fixtures are between about 20 feet (6 meter rounded down) and 40 feet (13 meter rounded up) above ground level. In other cases, the streetlight fixtures may of course be lower than 20 feet (6 meter rounded down) above the ground or higher than 40 feet (13 meter rounded up) above the ground. In other system level deployments according to the present disclosure, there may be 1,000 or more light poles are arranged in one or more determined geographic areas. In these or in still other cases, the streetlight fixtures 102 may of course be lower than 20 feet (6 meter rounded down) above the ground or higher than 40 feet (13 meter rounded up) above the ground. Although described as being above the ground, streetlight fixtures shown and contemplated in the present disclosure may also be subterranean, but positioned above the floor, such as in a tunnel.

The system of streetlight poles, streetlight fixtures, streetlight sources, or the like in the system level deployment may be controlled by a municipality or other government agency. In other cases, the system streetlight poles, streetlight fixtures, streetlight sources, or the like in the system level deployment is controlled by a private entity (*e.g*., private property owner, third-party service contractor, or the like). In still other cases, a plurality of entities share control of the system of streetlight poles, streetlight fixtures, streetlight sources, or the like. The shared control may be hierarchical or cooperative in some other fashion. For example, when the system is controlled by a municipality or a department of transportation, an emergency services agency (*e.g*., law enforcement, medical services, fire services) may be able to request or otherwise take control of the system. In still other cases, one or more subparts of the system of streetlight poles, streetlight fixtures, streetlight sources, or the like can be granted some control such as in a neighborhood, around a hospital or fire department, in a construction area, or in some other manner.

In the system level deployment 200 of FIG. 8, any number of streetlight fixtures may be arranged with a connector that is compliant with a roadway area lighting standard promoted by a standards body. The connector permits the controlling or servicing authority of the system to competitively and efficiently purchase and install light sensors on each streetlight fixture. In addition, or in the alternative, the standardized connector in each streetlight fixture permits the controlling or servicing authority to replace conventional light sensors with other devices such as a small cell networking device 100, a smart sensor device 120 (FIGS. 5A, 6), or some other device.

In the system level deployment 200, a small cell networking device is electromechanically coupled to a selected light pole wherein the electromechanical coupling is performed via the connector that is compliant with the roadway area lighting standard promoted by a standards body. Stated differently, the system level deployment 200 includes at least one light pole and fixture with a small cell networking device 202, and a plurality of light poles each having a smart sensor device 204A-204H. In these light poles 204A-204H, each streetlight fixture is equipped with a standalone smart device such as the smart sensor device 120 of FIGS. 5A and 6 that is electromechanically coupled via a respective connector that is compliant with the roadway area lighting standard promoted by the standards body. In this arrangement, each streetlight 202, 204A-204H is equipped with a light sensor that is further electrically coupled to a processor-based light control circuit. In at least some of these embodiments, electrically coupling the light sensor to the processor-based light control circuit includes passing a signal representing an amount of light detected by the light sensor to the processor-based light control circuit. In at least some of these embodiments, the light sensor is arranged to detect an amount of lux, lumens, or other measurement of luminous flux and generate the signal representing the amount of light detected.

The processor-based light control circuit of each smart device is arranged to provide a light control signal to the respective light source based on at least one ambient light signal generated by its associated the light sensor. In addition, because each streetlight 202, 204A-204H is equipped with communication capabilities, each light source in each streetlight 202, 204A-204H can be controlled remotely as an independent light source or in combination with other light sources. In these cases, each of the plurality of light poles and fixtures with a smart sensor device 204A-204H is communicatively coupled to the light pole and fixture with a small cell networking device 202. The communicative relationship from each of the plurality of light poles and fixtures with a smart sensor device 204A-204H to the light pole and fixture with a small cell networking device 202 may be a direct communication or an indirect communication. That is, in some cases, one of the plurality of light poles and fixtures with a smart sensor device 204A-204H may communicate directly to the light pole and fixture with a small cell networking device 202 or the one of the plurality of light poles and fixtures with a smart sensor device 204A-204H may communicate via one or more other ones of the plurality of light poles and fixtures with a smart sensor device 204A-204H.

In the system level deployment 200 of FIG. 8, various ones of the light poles may be 50 feet apart, 100 feet apart, 250 feet apart, or some other distance. In some cases, the type and performance characteristics of each small cell networking device 100 and each smart sensor device 120 are selected based on their respective distance to other such devices such that wireless communications are acceptable.

The light pole and fixture with a small cell networking device 202 and each light pole and fixture with a smart sensor device 204A-204H is coupled to a street cabinet 208 or other like structure that provides utility power (e.g., "the power grid") in a wired way. The utility power may provide 120VAC, 208VAC, 220VAC, 240VAC, 260VAC, 277VAC, 360VAC, 415VAC, 480VAC, 600VAC, or some other power source voltage. In addition, the light pole and fixture with a small cell networking device 202, and optionally one or more of the light poles and fixtures with smart sensor devices 204A-204H, are also coupled to the same street cabinet 208 or another structure via a wired backhaul connection. It is understood that these wired connections are in some cases separate wired connections (*e.g*., copper wire, fiber optic cable, industrial Ethernet cable, or the like) and in some cases combined wired connections (*e.g*., power over Ethernet (PoE), powerline communications, or the like). For simplification of the system level deployment 200 of FIG. 8, the wired backhaul and power line 206 is illustrated as a single line. The street cabinet 208 is coupled to the power grid, which is administered by a licensed power utility agency, and the street cabinet 208 is coupled to the public switched telephone network (PSTN).

In some examples useful for understanding the invention, any number of small cell networking devices 202 and smart sensor devices 204A-204H are arranged to provide utility grade power metering functions. The utility grade power metering functions may be performed with a circuit arranged apply any one or more of a full load, a partial load, and a load where voltage and current are out of phase (*e.g*., 60 degrees; 0.5 power factor). Other metering methodologies are also contemplated.

Each light pole and fixture with a smart sensor device 204 is in direct or indirect wireless communication with the light pole and fixture that has the small cell networking device 202. In addition, each light pole and fixture with a smart sensor device 204 and the light pole and fixture with the small cell networking device 202 may also be in direct or indirect wireless communication 212 with an optional remote computing device 210. The remote computing device 210 may be controlled by an MNO, a municipality, another government agency, a third party, or some other entity. By this optional arrangement, the remote computing device can be arranged to wirelessly communicate light control signals and any other information (*e.g*., packetized data) between itself and each respective wireless networking device coupled to any of the plurality of light poles.

A user 214 holding a mobile device 216 is represented in the system level deployment 200 of FIG. 8. A vehicle having an in-vehicle mobile device 218 is also represented. The vehicle may be an emergency service vehicle, a passenger vehicle, a commercial vehicle, a public transportation vehicle, a drone, or some other type of vehicle. The user 214 may use their mobile device 216 to establish a wireless communication session over a cellular-based network controlled by an MNO, wherein packetized wireless data is passed through the light pole and fixture with a small cell networking device 202. Concurrently, the in-vehicle mobile device 218 may also establish a wireless communication session over the same or a different cellular-based network controlled by the same or a different MNO, wherein packetized wireless data of the second session is also passed through the light pole and fixture with a small cell networking device 202.

Other devices may also communicate through light pole-based devices of the system level deployment 200. These devices may be internet of things (IoT) devices or some other types of devices. In FIG. 8, two public information signs 220A, 220B, and a private entity sign 220C are shown, but many other types of devices are contemplated. Each one of these devices may form an unlicensed wireless communication session (*e.g*., WiFi) or a cellular-based wireless communication session with one or more wireless networks made available by the devices shown in the system level deployment 200 of FIG. 8.

The sun and moon 222 are shown in FIG. 8. Light or the absence of light based on time of day, weather, geography, or other causes provide information (*e.g*., ambient light) to the light sensors of the light pole mounted devices described in the present disclosure. Based on this information, the associated light sources may be suitably controlled.

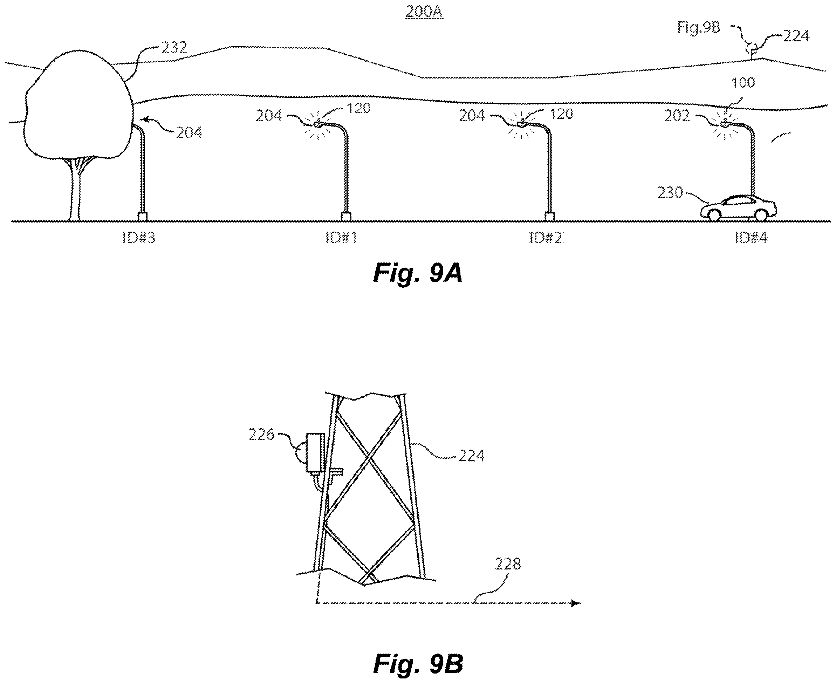

FIG. 9A is another partial system level deployment 200A, and FIG. 9B is a closer view of one portion of the partial system level deployment 200A of FIG. 9A. A light pole and fixture with a small cell networking device 202 is shown, and a plurality of light poles and fixtures with a smart sensor device 204 are shown. Each one of the devices has its own identifier, and all of the devices are communicatively coupled to each other. The communication may be in a wired or wireless manner. A power structure 224 is also shown in FIG. 9A and shown in greater detail in FIG. 9B. The power structure may include an MNO macrocell 226, which is in communicative relationship to the light pole and fixture with a small cell networking device 202. Power, backhaul communications, or both power and backhaul communications may be passed via a wire bundle 228 coupled to the power structure 224.

Using the devices of FIGS. 9A and 9B, a user in a vehicle 230 may make a cellular-based call. For example, if the cellular based call is coupled through the macrocell 226, when the vehicle 230 moves away from the power structure, the call may be passed or seamlessly connected in another way through a cellular-based network enabled by the light pole and fixture with a small cell networking device 202.

In at least some cases, motion may be detected in proximity to any one of the devices of FIGS. 9A and 9B based on wireless communication activity. That is, a mobile device may be detected as being in proximity to any particular light pole based on recognition of previous hand-offs of the communication from one device to another device, based on a prediction of handoff to or from one device to another device, by tracking signal strength from a particular mobile device, by tracking quality of a wireless signal, or based on some other aspect of the wireless communication session. In some cases, the wireless communication may include a signal detected (*e.g*., "sniffed") even though the mobile device is not in active wireless communications with the particular smart sensor device 204 or small cell networking device 202. In this way, motion detection in the systems described herein may be accomplished in the absence of any sound detection devices, infrared sensor devices, camera-based devices, heat detection devices, or the like.

In FIG. 9A, a tree 232 is obstructing light from a particular one of the light poles and fixtures with a smart sensor device 204 (*i.e*., ID#3). In some cases, the smart sensor device 120 of the particular light pole (*i.e*., ID#3) is arranged to detect the obstruction, directly or indirectly communicate the problem through the small cell networking device 100, and summon service to clear the obstruction.

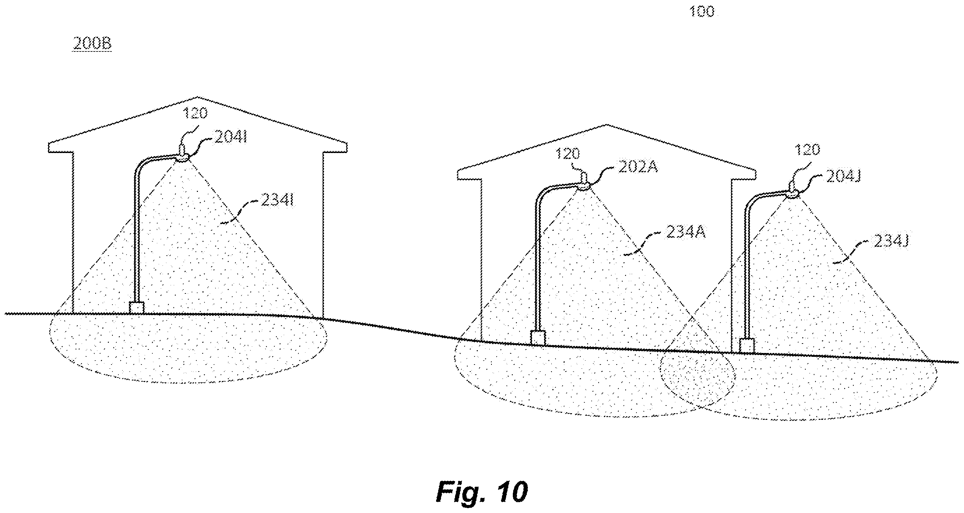

FIG. 10 is one more partial system level deployment 200B. In the partial system level deployment 200B, a light pole and fixture with a small cell networking device 202A is shown and two light poles and fixtures with a smart sensor device 2041, 204J are shown. The individual small cell networking device 100 and smart sensor devices 120 are also identified. In some cases, a light sensor detects both ambient light from above its respective fixture and other light from different directions. For example, where light from two light sources overlap, one or both of the small cell networking device 100 and the smart sensor devices 120 may adjust their light output. The adjustment may be a reduction in light output, a directional change to light output, or some other adjustment. Along these lines, where light from two light sources do not overlap at all, there may be areas in need of additional illumination. In this case, one or both of the small cell networking device 100 and the smart sensor devices 120 may adjust their light output. In some cases, the small cell networking device 100 and the smart sensor devices 120 are arranged to dynamically detect motion and adjust light output to increase, decrease, or change other parameters such as direction of light output as the motion is directionally detected.

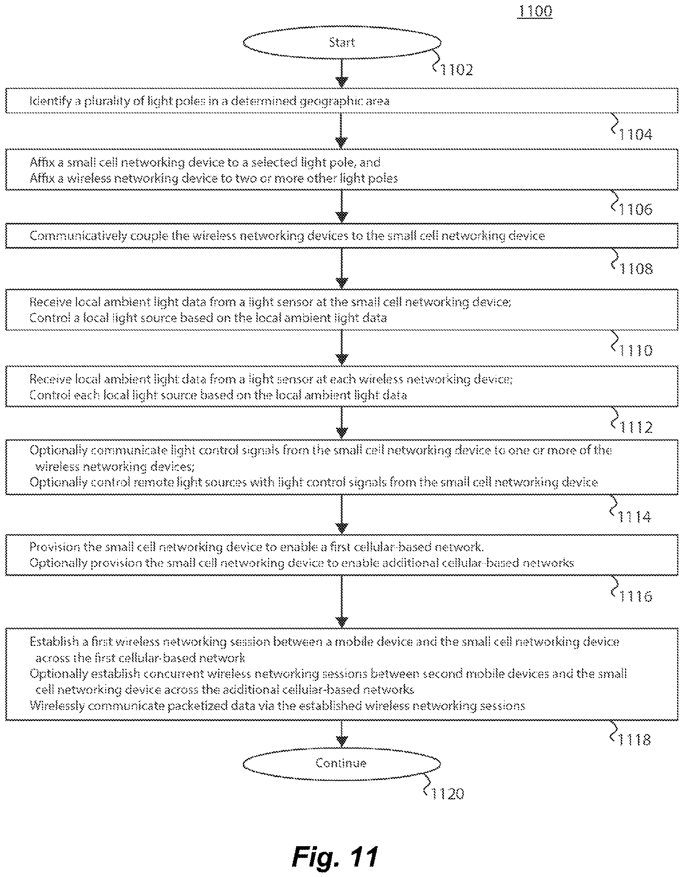

FIG. 11 is a flowchart 1100 useful for understanding the invention showing some operations of a system that deploys at least one small cell networking device 100 on a light pole or other such aerial platform. Processing begins at 1102.

At 1104, a plurality of light poles in a determined geographic area are identified. The light poles may be arranged for street lights that are mounted above a roadway, parking lot, construction sight, disaster area, or any other desirable geographic area. The light poles, light fixtures, light sources, and any other associated components may individually or collectively be controlled by a government entity, a private entity, or some other entity in whole or in a shared arrangement. In each of the identified light poles, at 1106, a particular device of the types described in the present disclosure (*i.e*., small cell networking device 100, wireless networking device 120) are affixed. More particularly, the devices are electromechanically coupled to a light fixture deployed on the associated light pole. The electromechanical coupling is implemented via a connector/receptacle system that conforms to a particular standard. One non-limiting example of such a standard is the Roadway and Area Lighting Equipment standard referred to as the ANSI C136 and promulgated by the National Electrical Manufacturers Association (NEMA).

Processing continues to 1108 where one or more of the wireless networking devices (*e.g*., wireless networking devices 120) are communicatively coupled to each other and to the small cell networking device (*e.g*., small cell networking device 100). The communicative coupling may be via an open protocol or proprietary wireless protocol in the unlicensed band (*e.g*., WiFi) or a licensed non-cellular radio band. The communicative coupling may be via a wired protocol such as Ethernet, Power over Ethernet (PoE), powerline communications (PLC) or some other wired protocol. The communicative coupling via the wired protocol may be conducted over a copper medium, a fiber optic medium, a utility-controlled power line, or some medium alone or in any combination. The communicative coupling permits packetized data transfer between any one or more of the wireless networking devices coupled to the light poles.

At 1110 and 1112, ambient light collected by light sensor modules associated with the wireless networking devices is used to control a local light source on the light pole where the respective device is mounted. In this way, the wireless networking devices can operate as a conventional light sensor mounted on a conventional light fixture of a conventional light pole.

Optionally, at 1114, light control signals sent from one device, such as the small cell networking device 100, are used to control the local light source of a light pole having a wireless networking device (*e.g*., wireless networking device 120). This smart control of a plurality of lights from one or more locations may bring energy efficiency to the system of streetlights. Exemplary control systems may direct the streetlights holistically for actual weather, crowd control, crowd abatement, crowd movement in a desired direction, law enforcement, detected motion, detected audio signal patterns, and for many other purposes.

Processing continues at 1116 where the small cell networking device is provisioned to enable wireless communications on a first cellular-based network. The first cellular-based network may be controlled by a mobile network operator (MNO), and the provisioning may be performed by the MNO or any other authorized system or technician. The provisioning may be performed in a factory or other location before a small cell networking device is deployed. The provisioning may be performed after the small cell networking device is deployed. The provisioning may be performed from a remote location. In some cases, a previously provisioned small cell networking device is re-provisioned for the same MNO or for a different MNO. Optionally, the small cell networking device may be further provisioned to enable one or more additional cellular-based networks controlled by the same MNO or controlled by a different MNO.

At 1118, processing continues to permit the establishment of a first wireless networking session between a mobile device and the small cell networking device across the cellular-based network controlled by the MNO. Optionally, other concurrent or separate wireless networking sessions may also be established between the same or other mobile devices and the small cell networking device across any one or more of the additionally provisioned cellular-based networks. The wireless networking sessions can be used to wirelessly communicate packetized data from a mobile device to any other type of device that permits such sessions. For example, the established wireless networking sessions may communicate voice calls, email, text messages, internet communications, or any other such data.

Processing at 1120 continues and does not end. That is, the system as deployed may continue to operate in perpetuity without ending. Various ones of the wireless networking devices or small cell networking devices may be introduced to the system, removed from the system, repositioned within the system, or reconfigured in any number of ways. Parameters of each device may be changed to alter the operating characteristics of any of the devices. Control of the parameters may be performed locally or remotely, manually or automatically.

Having now set forth certain embodiments, further clarification of certain terms used herein may be helpful to providing a more complete understanding of that which is considered inventive in the present disclosure.

Mobile network operators (MNOs) provide wireless cellular-based services in accordance with one or more cellular-based technologies. As used in the present disclosure, "cellular-based" should be interpreted in a broad sense to include any of the variety of technologies that implement wireless or mobile communications. Exemplary cellular-based systems include, but are not limited to, time division multiple access ("TDMA") systems, code division multiple access ("CDMA") systems, and Global System for Mobile communications ("GSM") systems. Some others of these technologies are conventionally referred to as UMTS, WCDMA, 4G, 5G, and LTE. Still other cellular-based technologies are also known now or will be known in the future. The underlying cellular-based technologies are mentioned here for a clearer understanding of the present disclosure, but the inventive aspects discussed herein are not limited to any particular cellular-based technology.

In some cases, cellular-based voice traffic is treated as digital data. In such cases, the term "voice-over-Internet-Protocol", or "VoIP," may be used to mean any type of voice service that is provided over a data network, such as an Internet Protocol (IP) based network. The term VoIP is interpreted broadly to include any system wherein a voice signal from a mobile computing device is represented as a digital signal that travels over a data network. VoIP then may also include any system wherein a digital signal from a data network is delivered to a mobile computing device where it is later delivered as an audio signal.

Connector devices of the types described herein are also commonly referred to as NEMA devices, NEMA compatible devices, NEMA compliant devices, or the like. And these devices include receptacles, connectors, sockets, holders, components, etc. Hence, as used in the present disclosure and elsewhere, those of skill in the art will recognize that coupling the term "NEMA" or the term "ANSI" with any such device indicates a device or structure compliant with a standard promoted by a standards body such as NEMA, ANSI, IEEE, or the like.

A mobile device, or mobile computing device, as the terms are used interchangeably herein, is an electronic device provisioned by at least one mobile network operator (MNO) to communicate data through the MNO's cellular-based network. The data may be voice data, short message service (SMS) data, electronic mail, world-wide web or other information conventionally referred to as "internet traffic," or any other type of electromagnetically communicable information. The data may be digital data or analog data. The data may be packetized or non-packetized. The data may be formed or passed at a particular priority level, or the data may have no assigned priority level at all. A non-comprehensive, non-limiting list of mobile devices is provided to aid in understanding the bounds of the term, "mobile device," as used herein. Mobile devices (*i.e*., mobile computing devices) include cell phones, smart phones, flip phone, tablets, phablets, handheld computers, laptop computers, body-worn computers, and the like. Certain other electronic equipment in any form factor may also be referred to as a mobile device when this equipment is provisioned for cellular-based communication on an MNO's cellular-based network. Examples of this other electronic equipment include in-vehicle devices, medical devices, industrial equipment, retail sales equipment, wholesale sales equipment, utility monitoring equipment, and other such equipment used by private, public, government, and other entities.

Mobile devices further have a collection of input/output ports for passing data over short distances to and from the mobile device. For example, serial ports, USB ports, WiFi ports, Bluetooth ports, IEEE 1394 FireWire, and the like can communicatively couple the mobile device to other computing apparatuses.

Mobile devices have a battery or other power source, and they may or may not have a display. In many mobile devices, a signal strength indicator is prominently positioned on the display to provide network communication connectivity information to the mobile device user.

A cellular transceiver is used to couple the mobile device to other communication devices through the cellular-based communication network. In some cases, software and data in a file system are communicated between the mobile device and a computing server via the cellular transceiver. That is, bidirectional communication between a mobile device and a computing server is facilitated by the cellular transceiver. For example, a computing server may download a new or updated version of software to the mobile device over the cellular-based communication network. As another example, the mobile device may communicate any other data to the computing server over the cellular-based communication network.

Each mobile device client has electronic memory accessible by at least one processing unit within the device. The memory is programmed with software that directs the one or more processing units. Some of the software modules in the memory control the operation of the mobile device with respect to generation, collection, and distribution or other use of data. In some cases, software directs the collection of individual datums, and in other cases, software directs the collection of sets of data.

Software may include a fully executable software program, a simple configuration data file, a link to additional directions, or any combination of known software types. When the computing server updates software, the update may be small or large. For example, in some cases, a computing server downloads a small configuration data file to as part of software, and in other cases, computing server completely replaces all of the present software on the mobile device with a fresh version. In some cases, software, data, or software and data is encrypted, encoded, and/or otherwise compressed for reasons that include security, privacy, data transfer speed, data cost, or the like.

Processing devices, or "processors," as described herein, include central processing units (CPU's), microprocessors, microcontrollers (MCU), digital signal processors (DSP), application specific integrated circuits (ASIC), state machines, and the like. Accordingly, a processor as described herein includes any device, system, or part thereof that controls at least one operation, and such a device may be implemented in hardware, firmware, or software, or some combination of at least two of the same. The functionality associated with any particular processor may be centralized or distributed, whether locally or remotely. A processors may interchangeably refer to any type of electronic control circuitry configured to execute programmed software instructions. The programmed instructions may be high-level software instructions, compiled software instructions, assembly-language software instructions, object code, binary code, micro-code, or the like. The programmed instructions may reside in internal or external memory or may be hard-coded as a state machine or set of control signals. According to methods and devices referenced herein, one or more embodiments describe software executable by the processor, which when executed, carries out one or more of the method acts.

As known by one skilled in the art, a computing device, including a mobile computing device, has one or more memories, and each memory may comprise any combination of volatile and non-volatile computer-readable media for reading and writing. Volatile computer-readable media includes, for example, random access memory (RAM). Non-volatile computer-readable media includes, for example, any one or more of read only memory (ROM), magnetic media such as a hard-disk, an optical disk, a flash memory device, a CD-ROM, and the like. In some cases, a particular memory is separated virtually or physically into separate areas, such as a first memory, a second memory, a third memory, etc. In these cases, it is understood that the different divisions of memory may be in different devices or embodied in a single memory. Some or all of the stored contents of a memory may include software instructions executable by a processing device to carry out one or more particular acts.

In the present disclosure, memory may be used in one configuration or another. The memory may be configured to store data. In the alternative or in addition, the memory may be a non-transitory computer readable medium (CRM) wherein the CRM is configured to store instructions executable by a processor. The instructions may be stored individually or as groups of instructions in files. The files may include functions, services, libraries, and the like. The files may include one or more computer programs or may be part of a larger computer program. Alternatively or in addition, each file may include data or other computational support material useful to carry out the computing functions of the systems, methods, and apparatus described in the present disclosure.

FIG. 11 is a flowchart 1100 useful for understanding the invention and illustrating processes that may be used by embodiments of computing devices such as small cell networking device 100 and wireless networking devices 120 when such devices are deployed on a light pole. In this regard, each described process may represent a module, segment, or portion of code, which comprises one or more executable instructions for implementing the specified logical function(s). It should also be noted that in some implementations, the functions noted in the process may occur in a different order, may include additional functions, may occur concurrently, and/or may be omitted.

As used in the present disclosure, the term "module" refers to an application specific integrated circuit (ASIC), an electronic circuit, a processor and a memory operative to execute one or more software or firmware programs, combinational logic circuitry, or other suitable components (hardware, software, or hardware and software) that provide the functionality described with respect to the module.

The terms, "real-time" or "real time," as used herein and in the claims that follow, are not intended to imply instantaneous processing, transmission, reception, or otherwise as the case may be. Instead, the terms, "real-time" and "real time" imply that the activity occurs over an acceptably short period of time (*e.g*., over a period of microseconds or milliseconds), and that the activity may be performed on an ongoing basis (*e.g*., recording and reporting the collection of utility grade power metering data, recording and reporting IoT data, crowd control data, anomalous action data, and the like). An example of an activity that is not real-time is one that occurs over an extended period of time (*e.g*., hours or days)] or that occurs based on intervention or direction by a person or other activity.

In the absence of any specific clarification related to its express use in a particular context, where the terms "substantial" or "about" in any grammatical form are used as modifiers in the present disclosure and any appended claims (*e.g*., to modify a structure, a dimension, a measurement, or some other characteristic), it is understood that the characteristic may vary by up to 30 percent. For example, a small cell networking device may be described as being mounted "substantially horizontal," In these cases, a device that is mounted exactly horizontal is mounted along an "X" axis and a "Y" axis that is normal (*i.e*., 90 degrees or at right angle) to a plane or line formed by a "Z" axis. Different from the exact precision of the term, "horizontal," and the use of "substantially" or "about" to modify the characteristic permits a variance of the particular characteristic by up to 30 percent. As another example, a small cell networking device having a particular linear dimension of between about six (6) inches (15 cm rounded down) and twelve (12) inches (31 cm rounded up) includes such devices in which the linear dimension varies by up to 30 percent. Accordingly, the particular linear dimension of the small cell networking device may be between 2.4 inches (6 cm rounded down) and 15.6 inches (40 cm rounded up).

The terms "include" and "comprise" as well as derivatives thereof, in all of their syntactic contexts, are to be construed without limitation in an open, inclusive sense, (*e.g*., "including, but not limited to"). The term "or," is inclusive, meaning and/or. The phrases "associated with" and "associated therewith," as well as derivatives thereof, can be understood as meaning to include, be included within, interconnect with, contain, be contained within, connect to or with, couple to or with, be communicable with, cooperate with, interleave, juxtapose, be proximate to, be bound to or with, have, have a property of, or the like.

Unless the context requires otherwise, throughout the specification and claims which follow, the word "comprise" and variations thereof, such as, "comprises" and "comprising," are to be construed in an open, inclusive sense, *e.g*., "including, but not limited to."

Reference throughout this specification to "one embodiment" or "an embodiment" and variations thereof means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content and context clearly dictates otherwise. It should also be noted that the conjunctive terms, "and" and "or" are generally employed in the broadest sense to include "and/or" unless the content and context clearly dictates inclusivity or exclusivity as the case may be. In addition, the composition of "and" and "or" when recited herein as "and/or" is intended to encompass an embodiment that includes all of the associated items or ideas and one or more other alternative embodiments that include fewer than all of the associated items or ideas.

In the present disclosure, conjunctive lists make use of a comma, which may be known as an Oxford comma, a Harvard comma, a serial comma, or another like term. Such lists are intended to connect words, clauses or sentences such that the thing following the comma is also included in the list.

As described herein, for simplicity, a user is in some case described in the context of the male gender. For example, the terms "his," "him," and the like may be used. It is understood that a user can be of any gender, and the terms "he," "his," and the like as used herein are to be interpreted broadly inclusive of all known gender definitions.

As the context may require in this disclosure, except as the context may dictate otherwise, the singular shall mean the plural and vice versa; all pronouns shall mean and include the person, entity, firm or corporation to which they relate; and the masculine shall mean the feminine and vice versa.

When so arranged as described herein, each computing device may be transformed from a generic and unspecific computing device to a combination device comprising hardware and software configured for a specific and particular purpose. When so arranged as described herein, to the extent that any of the inventive concepts described herein are found by a body of competent adjudication to be subsumed in an abstract idea, the ordered combination of elements and limitations are expressly presented to provide a requisite inventive concept by transforming the abstract idea into a tangible and concrete practical application of that abstract idea.

The headings and Abstract of the Disclosure provided herein are for convenience only and do not limit or interpret the scope or meaning of the embodiments.

The various embodiments described above can be combined to provide further embodiments. Aspects of the embodiments can be modified, if necessary to employ concepts of the various patents, application and publications to provide yet further embodiments.

This application claims the benefit of priority to U.S. Provisional Application No. 62/614,918, filed January 8, 2018.

These and other changes can be made to the embodiments in light of the above-detailed description.

## Claims

1. A small cell networking device (100), comprising:
an outer housing (102);
a first networking module (148A) positioned within the outer housing and arranged as a gateway to a first cellular-based network, the first cellular-based network controlled by a first mobile network operator;
a second networking module (148B) positioned within the outer housing and arranged as a gateway to a second cellular-based network, the second cellular-based network controlled by a second mobile network operator that is different than the first mobile network operator, wherein the first networking module and the second networking module enable concurrent wireless communication sessions over the first cellular-based network and the second cellular-based network from mobile devices in proximity to the small cell networking device;
a light sensor (104);
a processor-based light control circuit (154) arranged to provide a light control signal based on at least one ambient light signal generated by the light sensor (104);
a connector (108) arranged to electromechanically couple to a corresponding socket integrated with a streetlight fixture (110) and to receive alternating current, AC, power from the streetlight fixture; and
a power supply for converting the AC power to direct current, DC, power for use by the first networking module (148A), the second networking module (148B), the light sensor (104), and the processor-based light control circuit (154).

2. The small cell networking device (100) of claim 1, wherein the connector (108) is compliant with American National Standards Institute, ANSI, C136.

3. The small cell networking device (100) of claim 2, wherein the connector (108) is compliant with ANSI C136.41-2013.

4. The small cell networking device (100) of any of claims 1-3, wherein the small cell networking device (100) is a metrocell, a microcell, a picocell, or a femtocell.

5. The small cell networking device (100) of any of claims 1-4, wherein the connector (108) includes:
at least three pin structures, the at least three pin structures arranged for removable electromechanical coupling to the streetlight fixture (110).

6. The small cell networking device (100) of any of claims 1-5, wherein the first networking module (148A) includes:
a modular radio transceiver board, the modular radio transceiver board provisionable for operation in the first cellular-based network.

7. The small cell networking device (100) of any of claims 1-6, wherein the second networking module (148B) includes:
a modular radio transceiver board, the modular radio transceiver board provisionable for operation in the second cellular-based network.

8. The small cell networking device (100) of any of claims 1-7, further comprising:
at least two processing circuit boards (122, 124) configured in a vertically stacked arrangement, a first processing circuit board (122) of the least two processing circuit boards including the power supply and an interface to the connector (108), a second processing circuit board (124) of least two processing circuit boards including an applications processor;
a first coupling structure (128) that passes DC power signals from the first processing circuit board (122) to the second processing circuit board (124); and
a second coupling structure (130) that passes communication signals between the first processing circuit board (122) and the second processing circuit board (124).

9. A system comprising:
the small cell networking device (100) of any of claims 1-8;
a light pole (114); and
the streetlight fixture (110) coupled to the light pole and including the socket and a light source (112).

10. The system of claim 9, wherein the streetlight fixture (110) is elevated between six meters and thirteen meters above a roadway.

## Patentansprüche

1. Kleinzellen-Netzwerkgerät (100), umfassend:
ein Außengehäuse (102);
ein erstes Netzwerkmodul (148A), das innerhalb des Außengehäuses positioniert und als Gateway zu einem ersten zellularbasierten Netzwerk angeordnet ist, wobei das erste zellularbasierte Netzwerk von einem ersten Mobilfunknetzbetreiber gesteuert wird;
ein zweites Netzwerkmodul (148B), das innerhalb des Außengehäuses positioniert und als Gateway zu einem zweiten zellularbasierten Netzwerk angeordnet ist, wobei das zweite zellularbasierte Netzwerk von einem zweiten Mobilfunknetzbetreiber gesteuert wird, der sich vom ersten Mobilfunknetzbetreiber unterscheidet, wobei das erste Netzwerkmodul und das zweite Netzwerkmodul gleichzeitige drahtlose Kommunikationssitzungen von mobilen Geräten in der Nähe des Kleinzellen-Netzwerkgeräts über das erste zellularbasierte Netzwerk und das zweite zellularbasierte Netzwerk ermöglichen;
einen Lichtsensor (104);
eine prozessorbasierte Lichtsteuerschaltung (154), die so angeordnet ist, dass sie ein Lichtsteuersignal basierend auf mindestens einem vom Lichtsensor (104) erzeugten Umgebungslichtsignal bereitstellt;
einen Verbinder (108), der so angeordnet ist, dass er elektromechanisch mit einer entsprechenden Buchse, die in eine Straßenlaternenvorrichtung (110) integriert ist, koppelt und Wechselstrom, AC, von der Straßenlaternenvorrichtung empfängt; und
eine Stromversorgung zum Umwandeln des Wechselstroms, AC, in Gleichstrom, DC, zur Verwendung durch das erste Netzwerkmodul (148A), das zweite Netzwerkmodul (148B), den Lichtsensor (104) und die prozessorbasierte Lichtsteuerschaltung (154).

2. Kleinzellen-Netzwerkgerät (100) nach Anspruch 1, wobei der Verbinder (108) mit dem American National Standards Institute, ANSI, C136 konform ist.

3. Kleinzellen-Netzwerkgerät (100) nach Anspruch 2, wobei der Verbinder (108) mit ANSI C136.41-2013 konform ist.

4. Kleinzellen-Netzwerkgerät (100) nach einem der Ansprüche 1-3, wobei das Kleinzellen-Netzwerkgerät (100) eine Metrozelle, eine Mikrozelle, eine Pikozelle oder eine Femtozelle ist.

5. Kleinzellen-Netzwerkgerät (100) nach einem der Ansprüche 1-4, wobei der Verbinder (108) umfasst:
mindestens drei Stiftstrukturen, wobei die mindestens drei Stiftstrukturen für eine abnehmbare elektromechanische Kopplung mit der Straßenlaternenvorrichtung (110) angeordnet sind.

6. Kleinzellen-Netzwerkgerät (100) nach einem der Ansprüche 1-5, wobei das erste Netzwerkmodul (148A) umfasst:
eine modulare Funk-Transceiver-Platine, wobei die modulare Funk-Transceiver-Platine für den Betrieb im ersten zellularbasierten Netzwerk vorgesehen ist.

7. Kleinzellen-Netzwerkgerät (100) nach einem der Ansprüche 1-6, wobei das zweite Netzwerkmodul (148B) umfasst:
eine modulare Funk-Transceiver-Platine, wobei die modulare Funk-Transceiver-Platine für den Betrieb im zweiten zellularbasierten Netzwerk vorgesehen ist.

8. Kleinzellen-Netzwerkgerät (100) nach einem der Ansprüche 1-7, ferner umfassend:
mindestens zwei Prozessplatinen (122, 124), die in einer vertikal gestapelten Anordnung eingerichtet sind, wobei eine erste Prozessplatine (122) der mindestens zwei Prozessplatinen die Stromversorgung und eine Schnittstelle zum Verbinder (108) umfasst, wobei eine zweite Prozessplatine (124) der mindestens zwei Prozessplatinen einen Anwendungsprozessor umfasst;
eine erste Kopplungsstruktur (128), die Gleichstromsignale von der ersten Prozessplatine (122) an die zweite Prozessplatine (124) weiterleitet; und
eine zweite Kopplungsstruktur (130), die Kommunikationssignale zwischen der ersten Prozessplatine (122) und der zweiten Prozessplatine (124) weiterleitet.

9. System, umfassend:
das Kleinzellen-Netzwerkgerät (100) nach einem der Ansprüche 1-8;
einen Lichtmast (114); und
die Straßenlaternenvorrichtung (110), die mit dem Lichtmast gekoppelt ist und die Buchse und eine Lichtquelle (112) enthält.

10. System nach Anspruch 9, wobei die Straßenlaternenvorrichtung (110) zwischen sechs und dreizehn Metern über einer Fahrbahn angebracht ist.

## Revendications

1. Dispositif de réseautage à petites cellules (100), comprenant :
un boîtier extérieur (102) ;
un premier module de réseautage (148A) positionné dans le boîtier extérieur et conçu comme une passerelle vers un premier réseau cellulaire, le premier réseau cellulaire étant commandé par un premier opérateur de réseau mobile ;
un second module de réseautage (148B) positionné dans le boîtier extérieur et conçu comme une passerelle vers un second réseau cellulaire, le second réseau cellulaire étant commandé par un second opérateur de réseau mobile qui est différent du premier opérateur de réseau mobile, le premier module de réseautage et le second module de réseautage permettant des sessions de communication sans fil simultanées sur le premier réseau cellulaire et le second réseau cellulaire à partir de dispositifs mobiles à proximité du dispositif de réseautage à petites cellules ;
un capteur de lumière (104) ;
un circuit de commande de lumière basé sur un processeur (154) conçu pour fournir un signal de commande de lumière sur la base d'au moins un signal de lumière ambiante généré par le capteur de lumière (104) ;
un connecteur (108) conçu pour se coupler électromécaniquement à une prise femelle correspondante intégrée à un équipement de lampadaire (110) et pour recevoir une puissance à courant alternatif, CA, en provenance de l'équipement de lampadaire ; et
une alimentation électrique pour convertir la puissance CA en puissance à courant continu, CC, destinée à être utilisée par le premier module de réseautage (148A), le second module de réseautage (148B), le capteur de lumière (104) et le circuit de commande de lumière basé sur un processeur (154).

2. Dispositif de réseautage à petites cellules (100) selon la revendication 1, dans lequel le connecteur (108) est conforme à la norme C136 de l'institut national américain de normalisation, ANSI.

3. Dispositif de réseautage à petites cellules (100) selon la revendication 2, dans lequel le connecteur (108) est conforme à la norme C136.41-2013 de l'ANSI.

4. Dispositif de réseautage à petites cellules (100) selon l'une quelconque des revendications 1 à 3, dans lequel le dispositif de réseautage à petites cellules (100) est une métrocellule, une microcellule, une picocellule ou une femtocellule.

5. Dispositif de réseau à petites cellules (100) selon l'une quelconque des revendications 1 à 4, dans lequel le connecteur (108) comprend :
au moins trois structures de broche, les au moins trois structures de broche étant conçues pour un couplage électromécanique amovible à l'équipement de lampadaire (110).

6. Dispositif de réseautage à petites cellules (100) selon l'une quelconque des revendications 1 à 5, dans lequel le premier module de réseautage (148A) comprend :
une carte d'émetteur-récepteur radio modulaire, la carte d'émetteur-récepteur radio modulaire étant apte à fonctionner dans le premier réseau cellulaire.

7. Dispositif de réseautage à petites cellules (100) selon l'une quelconque des revendications 1 à 6, dans lequel le second module de réseautage (148B) comprend :
une carte d'émetteur-récepteur radio modulaire, la carte d'émetteur-récepteur radio modulaire étant apte à fonctionner dans le second réseau cellulaire.

8. Dispositif de réseautage à petites cellules (100) selon l'une quelconque des revendications 1 à 7, comprenant en outre :
au moins deux cartes de circuits imprimés de traitement (122, 124) configurées selon un arrangement empilé verticalement, une première carte de circuits imprimés de traitement (122) parmi les au moins deux cartes de circuits imprimés de traitement comprenant l'alimentation électrique et une interface avec le connecteur (108), une seconde carte de circuits imprimés de traitement (124) parmi les au moins deux cartes de circuits imprimés de traitement comprenant un processeur d'applications ;
une première structure de couplage (128) qui transmet des signaux de puissance CC de la première carte de circuits imprimés de traitement (122) à la seconde carte de circuits imprimés de traitement (124) ; et
une seconde structure de couplage (130) qui transmet des signaux de communication entre la première carte de circuits imprimés de traitement (122) et la seconde carte de circuits imprimés de traitement (124).

9. Système, comprenant :
le dispositif de réseautage à petites cellules (100) selon l'une quelconque des revendications 1 à 8 ;
un poteau d'éclairage (114) ; et
l'équipement de lampadaire (110) couplé au poteau d'éclairage et comprenant la prise femelle et une source de lumière (112).

10. Système selon la revendication 9, dans lequel l'équipement de lampadaire (110) est surélevé entre six mètres et treize mètres au-dessus d'une chaussée.
